# EUROPEAN PATENT APPLICATION

(11) **EP 4 614 357 A1**
(43) Date of publication of application: **10.09.2025**
(21) Application number: 22963970.3
(22) Date of filing: 03.11.2022
(51) Int. Cl.: G06F 17/00

(54) **MODEL SELECTION METHOD AND APPARATUS**

(71) Applicant: Beijing Xiaomi Mobile Software Co., Ltd., Beijing 100085 (CN)
(72) Inventor: MU, Qin, Beijing 100085 (CN); LI, Xiaolong, Beijing 100085 (CN)
(74) Representative: Gunzelmann, Rainer
(86) International application number: PCT/CN2022/129668
(87) International publication number: WO 2024/092660

(57) **Abstract**

The present disclosure belongs to the technical field of communications. Provided are a model selection method and apparatus, a device, and a storage medium. The method comprises: determining information used for model selection; and selecting a model according to the information used for model selection. The present disclosure provides a processing method for the situation of "model selection", such that model selection is carried out according to information used for model selection, the duration of model selection is then shortened, and it is unnecessary for a plurality of nodes to participate in selection, such that a situation where model selection is inaccurate due to inference nodes being different can be mitigated, and the efficiency and accuracy of model selection can be improved.

## Description

### FIELD

The present disclosure relates to the field of communication technology, and in particular to a model selection method, an apparatus, a device and a storage medium.

### BACKGROUND

In a communication system, the widespread use of mobile communication technologies has brought about huge changes to people's lives. The continued development of model technologies provides various applications for smart terminal devices, and promotes upgrading of various industries. During the operation of models, there may exist a plurality of trained models, and in practical use, one model is selected for model inference. However, different models correspond to different inference functions, and in a case that nodes for performing the inference are different, a model selection duration may increase, so the accuracy and efficiency of the model selection are relatively low.

### SUMMARY

An object of the present disclosure is to provide a model selection method, an apparatus, a device and a storage medium, so as to perform model selection based on information for the model selection, reduce the model selection duration, reduce the quantity of nodes participating in the model selection, prevent the occurrence of inaccurate model selection due to different inference nodes, and improve the efficiency and accuracy of the model selection.

In one aspect, the present disclosure provides in some embodiments a model selection method, executed by a first node, including:
determining information for model selection; and
selecting a model based on the information for the model selection.

In another aspect, the present disclosure provides in some embodiments a model selection method, executed by a second node, including:
sending information for model selection to a first node, where the information for the model selection is used to indicate the first node to select a model.

In yet another aspect, the present disclosure provides in some embodiments a model selection method, executed by a third node, including:
receiving a model selection result sent by a first node; and
performing a relevant operation based on the model selection result.

In still yet another aspect, the present disclosure provides in some embodiments a model selection apparatus, applied to a first node, including:
a determination module configured to determine information for model selection; and
a selection module configured to select a model based on the information for the model selection.

In still yet another aspect, the present disclosure provides in some embodiments a model selection apparatus, applied to a second node, including:
a sending module configured to send information for model selection to a first node, where the information for the model selection is used to indicate the first node to select a model.

In still yet another aspect, the present disclosure provides in some embodiments a model selection apparatus, applied to a third node, including:
a reception module configured to receive a model selection result sent by a first node; and
an execution module configured to perform a relevant operation based on the model selection result.

In still yet another aspect, the present disclosure provides in some embodiments a first node, including a processor and a memory. The memory is configured to store therein a computer program, and the processor is configured to execute the computer program to implement the above-mentioned model selection method.

In still yet another aspect, the present disclosure provides in some embodiments a second node, including a processor and a memory. The memory is configured to store therein a computer program, and the processor is configured to execute the computer program to implement the above-mentioned model selection method.

In still yet another aspect, the present disclosure provides in some embodiments a third node, including a processor and a memory. The memory is configured to store therein a computer program, and the processor is configured to execute the computer program to implement the above-mentioned model selection method.

In still yet another aspect, the present disclosure provides in some embodiments a communication apparatus, including a processor and an interface circuit.

The interface circuit is configured to receive a code instruction and transmit the code instruction to the processor; and
the processor is configured to execute the code instruction to implement the above-mentioned model selection method.

In still yet another aspect, the present disclosure provides in some embodiments a computer-readable storage medium storing therein an instruction. The instruction is executed to implement the above-mentioned model selection method.

In still yet another aspect, the present disclosure provides in some embodiments a model selection system, including:
a second node configured to send information for model selection to a first node; and
the first node configured to: receive the information for the model selection sent by the second node; and
select a model based on the information for the model selection.

In still yet another aspect, the present disclosure provides in some embodiments a model selection system, including:
a first node configured to: determine information for model selection,
select a model based on the information for the model selection, and
send a model selection result to a third node; and
the third node configured to: receive the model selection result sent by the first node, and
perform a relevant operation based on the model selection result.

In a word, in the embodiments of the present disclosure, the information for the model selection is determined, and the model is selected based on the information for the model selection. In the embodiments of the present disclosure, a model selection mechanism is provided, so as to determine the information for the model selection, prevent the occurrence of the inaccurate model selection, and improve the model selection efficiency. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

### BRIEF DESCRIPTION OF THE DRAWINGS

The above-mentioned and/or other aspects and advantages of the present disclosure may become apparent and easily understandable in the following description in conjunction with the drawings.
FIG. 1 is an exemplary schematic view of a framework of artificial intelligence in a radio air interface according to an embodiment of the present disclosure;
FIG. 2 is a schematic view showing a separation architecture of a wireless network according to an embodiment of the present disclosure;
FIG. 3 is a flow chart of a model selection method according to an embodiment of the present disclosure;
FIG. 4 is another flow chart of the model selection method according to an embodiment of the present disclosure;
FIG. 5 is yet another flow chart of the model selection method according to an embodiment of the present disclosure;
FIG. 6 is still yet another flow chart of the model selection method according to an embodiment of the present disclosure;
FIG. 7 is a schematic view showing the interaction of the model selection method according to an embodiment of the present disclosure;
FIG. 8 is still yet another flow chart of the model selection method according to an embodiment of the present disclosure;
FIG. 9 is another schematic view showing the interaction of the model selection method according to an embodiment of the present disclosure;
FIG. 10 is still yet another flow chart of the model selection method according to an embodiment of the present disclosure;
FIG. 11 is yet another schematic view showing the interaction of the model selection method according to an embodiment of the present disclosure;
FIG. 12 is still yet another flow chart of the model selection method according to an embodiment of the present disclosure;
FIG. 13 is still yet another schematic view showing the interaction of the model selection method according to an embodiment of the present disclosure;
FIG. 14 is still yet another flow chart of the model selection method according to an embodiment of the present disclosure;
FIG. 15 is still yet another schematic view showing the interaction of the model selection method according to an embodiment of the present disclosure;
FIG. 16 is still yet another flow chart of the model selection method according to an embodiment of the present disclosure;
FIG. 17 is still yet another schematic view showing the interaction of the model selection method according to an embodiment of the present disclosure;
FIG. 18 is still yet another flow chart of the model selection method according to an embodiment of the present disclosure;
FIG. 19 is still yet another schematic view showing the interaction of the model selection method according to an embodiment of the present disclosure;
FIG. 20 is still yet another flow chart of the model selection method according to an embodiment of the present disclosure;
FIG. 21 is still yet another schematic view showing the interaction of the model selection method according to an embodiment of the present disclosure;
FIG. 22 is still yet another flow chart of the model selection method according to an embodiment of the present disclosure;
FIG. 23 is still yet another flow chart of the model selection method according to an embodiment of the present disclosure;
FIG. 24 is still yet another schematic view showing the interaction of the model selection method according to an embodiment of the present disclosure;
FIG. 25 is still yet another flow chart of the model selection method according to an embodiment of the present disclosure;
FIG. 26 is still yet another schematic view showing the interaction of the model selection method according to an embodiment of the present disclosure;
FIG. 27 is still yet another flow chart of the model selection method according to an embodiment of the present disclosure;
FIG. 28 is still yet another schematic view showing the interaction of the model selection method according to an embodiment of the present disclosure;
FIG. 29 is still yet another flow chart of the model selection method according to an embodiment of the present disclosure;
FIG. 30 is still yet another schematic view showing the interaction of the model selection method according to an embodiment of the present disclosure;
FIG. 31 is still yet another flow chart of the model selection method according to an embodiment of the present disclosure;
FIG. 32 is still yet another schematic view showing the interaction of the model selection method according to an embodiment of the present disclosure;
FIG. 33 is still yet another flow chart of the model selection method according to an embodiment of the present disclosure;
FIG. 34 is still yet another schematic view showing the interaction of the model selection method according to an embodiment of the present disclosure;
FIG. 35 is still yet another flow chart of the model selection method according to an embodiment of the present disclosure;
FIG. 36 is still yet another schematic view showing the interaction of the model selection method according to an embodiment of the present disclosure;
FIG. 37 is still yet another flow chart of the model selection method according to an embodiment of the present disclosure;
FIG. 38 is still yet another flow chart of the model selection method according to an embodiment of the present disclosure;
FIG. 39 is a schematic view showing a model selection system according to an embodiment of the present disclosure;
FIG. 40 is another schematic view showing the model selection system according to an embodiment of the present disclosure;
FIG. 41 is a schematic view showing a model selection apparatus according to an embodiment of the present disclosure;
FIG. 42 is another schematic view showing the model selection apparatus according to an embodiment of the present disclosure;
FIG. 43 is yet another schematic view showing the model selection apparatus according to an embodiment of the present disclosure;
FIG. 44 is a block diagram of a user equipment (UE) according to an embodiment of the present disclosure; and
FIG. 45 is a block diagram of a network side device according to an embodiment of the present disclosure.

### DETAILED DESCRIPTION

Reference will now be made in detail to illustrative embodiments, examples of which are illustrated in the accompanying drawings. The following description refers to the accompanying drawings in which the same numbers in different drawings represent the same or similar elements unless otherwise represented. The implementations set forth in the following description of illustrative embodiments do not represent all implementations consistent with the present disclosure. They are merely examples of apparatuses and methods consistent with some aspects of the present disclosure as recited in the appended claims.

Terms used in the embodiments of the present disclosure are only for the purpose of describing specific embodiments, and shall not be construed to limit the present disclosure. As used in the embodiments of the present disclosure and the appended claims, "a/an" and "the" in a singular form are intended to include plural forms, unless clearly indicated in the context otherwise. It should be understood that, the term "and/or" used herein represents and contains any one of associated listed items and all possible combinations of more than one associated listed items.

It should be understood that terms such as "first," "second" and "third" may be used in the embodiments of the present disclosure for describing various information, the information should not be limited by these terms. These terms are only used for distinguishing information of the same type from others. For example, first information may also be referred to as second information, and similarly, the second information may also be referred to as the first information, without departing from the scope of the embodiments of the present disclosure. As used herein, the term "if" may be construed to mean "when" or "upon" or "in response to determining" depending on the context.

Network elements or network functions involved in the embodiments of the present disclosure may be implemented through separate hardware devices, or through software in the hardware devices, which will not be particularly defined herein.

In a communication system, the widespread use of the 5G technology has brought a huge change to people's lives. Based on the vision of the International Telecommunication Union (ITU), a 5^{th} Generation (5G) Mobile Communication Technology will permeate into various fields of a future society to create an all-around information ecosystem with users as a center. For example, a 5G user experience rate is up to 100Mbit/s to 1Gbit/s, so it is able to support such ultimate service experience as mobile Virtual Reality (VR). For example, a 5G peak rate is up to 10Gbit/s to 20Gbit/s, and a flow density is up to 10Mbit/s/m², so it is able to support a thousand-fold increase in mobile service flows in the future. For example, a 5G connection density is up to 1 million connections/m², so it is able to support a huge number of Internet of Things (IoT) devices. For example, a 5G transmission delay is at a millisecond level, so it is able to meet the strict requirements on the Internet of Vehicles (IoV) and industrial control. For example, the 5G supports a movement speed of 500km/h, so it is able to achieve excellent user experience in a high-speed railway environment. Hence, as a representative of novel infrastructures, the 5G will recreate a future information-based society.

Recently, the model technology has made breakthroughs in various fields. The continuous development of the model technology in such fields as intelligent voice and computer vision provides various applications for smart terminal devices, and the model technology is also widely used in such fields as education, traffic, home, medical treatment, retails, and security and protection, so as to facilitate the people's lives and promote the upgrading of various industries. In addition, the interdisciplinary application of the model technology with the other disciplines are accelerating, so that knowledge of different disciplines is fused, and new directions and methods are provided for the development of different disciplines.

In 3^{rd} Generation Partnership Project (3GPP) Release 18, use cases to be taken into consideration include Channel State Information (CSI) compression, positioning, beam management, etc. A research project about an artificial intelligence technology in a radio air interface is set up in a Radio Access Network 1 (RAN1). This project intends to study how to introduce the artificial intelligence technology into the radio air interface, and discuss how a radio air interface transmission technology is assisted and improved by the artificial intelligence technology. In discussions about models in RAN1, after the training of models has been completed, with respect to a same function, a plurality of trained models may be available, and a UE and/or a base station may select an optimum model from these models to perform model inference.

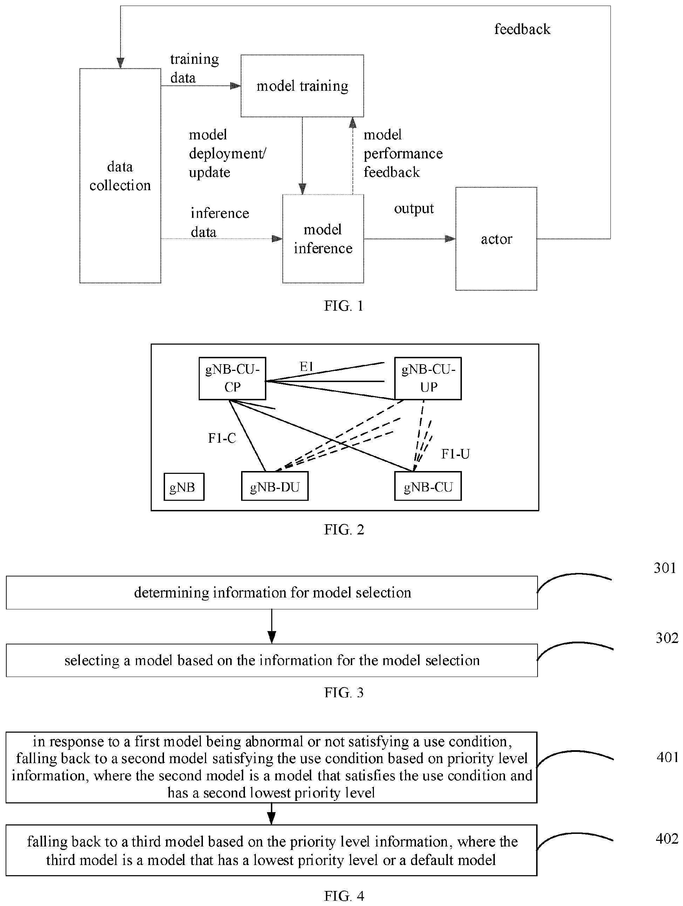

FIG. 1 is an exemplary schematic view showing architecture of artificial intelligence in the radio air interface according to an embodiment of the present disclosure. As shown in FIG. 1, for example, a procedure includes data collection, training data, model training, model deployment/update, inference data, model inference, output, model performance feedback, actor and feedback.

In an embodiment of the present disclosure, in an Artificial Intelligence (AI) operation, the involved procedures include at least one of:
collection of training data;
model training;
model transmission;
monitoring of model inference performance;
fine tuning of an AI model;
AI model inference; or
model update.

The collection of the training data refers to the collection of data from a network node, a management entity or a terminal as a basis for AI/ML model training, data analysis and inference.

An AI/ML model refers to a data driving algorithm in which a machine learning technique is used, and a set of outputs consisting of prediction information and/or decision parameters are generated based on a set of inputs.

The AI/ML training refers to an online or offline process of training the AI/ML model via learning features and modes which best present data, and performing inference using the obtained AI/ML model.

The AI/ML inference refers to a process of performing prediction or making a decision using the trained AI/ML model based on the collected data and the AI/ML model.

FIG. 2 is a schematic view showing a separation architecture of a wireless network according to an embodiment of the present disclosure. As shown in FIG. 2, the separation architecture includes a next generation Node B (gNB), a Central Unit (CU), a Distributed Unit (DU), and a control plane (CP), where gNB-CU-CP represents a control plane of a central unit, gNB-CU-UP represents a user plane of a central unit, E1 is used to an interface connection between gNB-CU-CP and gNB-CU-UP, F1-C is used for a control plane connection between gNB-CU and gNB-DU, and F1-U is used for a user plane connection between gNB-CU and gNB-DU. In addition, gNB-CU-CP takes charge of functions of a Packet Data Convergence Protocol (PDCP) control plane and Radio Resource Control (RRC), gNB-CU-UP takes charge of functions of GTP-U, a Service Data Adaptation Protocol (SDAP) user plane and a PDCP user plane, and gNB-DU takes charge of functions of Radio Link Control (RLC), Multiple Access Channel (MAC) and a Physical Layer (PHY). In a case that the AI model is applied to an air interface technology, depending on different use cases, a base station and/or a UE may perform the inference based on the AI model to improve a corresponding technical function. Because the functions for performing the inference are different, i.e., the inference using the AI model may be performed at the physical layer, the MAC layer, the RLC layer, the PDCP layer, the RRC layer or a new AI layer, nodes for performing the inference may be different in the separation architecture of the wireless network or in a multi-connectivity scenario. Hence, there is such a circumstance where the accuracy of the model selection is relatively low.

A model selection method, an apparatus, a device and a storage medium provided in the embodiments of the present disclosure will be described hereinafter in details in conjunction with the drawings.

FIG. 3 is a flow chart of a model selection method according to an embodiment of the present disclosure, and this method is executed by a first node. As shown in FIG. 3, the method includes the following steps.

Step 301: information for model selection is determined.

Step 302: a model is selected based on the information for the model selection.

In an embodiment of the present disclosure, the technical solution may be applied to different network architecture, which includes, but not limited to, a separation architecture and a multi-connectivity scenario.

In an embodiment of the present disclosure, for example, in a case that the first node selects the model based on the information for the model selection, the first node selects an appropriate model based on the information for the model selection.

In an embodiment of the present disclosure, for example, in a case that the first node selects the model based on the information for the model selection, the first node selects a model corresponding to the information based on the information for the model selection.

In an embodiment of the present disclosure, the information for the model selection includes at least one of:
the information for the model selection includes at least one of: priority level information, where a priority level is used to indicate a model selection priority level and/or a fallback priority level;
range information for the model selection, where the range information is used to indicate a range in which a model is available;
use time information, where the use time information is used to indicate time in a case the model is available;
UE status information, where the UE status information is used to indicate a status of a UE in a case that a model is available;
function type information, where the function type information is used to indicate a function for the model;
an event criterion, where the event criterion is used to indicate a specific event to be used by the model;
a wireless environment-related threshold criterion, where the wireless environment-related threshold criterion is used to indicate a wireless environment in which the model is available;
a service-related criterion, where the service-related criterion is used to indicate a specific service and/or a service experience for which the model is available;
a model performance-related criterion, where the model performance-related criterion is used to indicate a performance index for which the model is available;
a UE movement speed criterion, where the UE movement speed criterion is used to indicate a movement speed and/or a specific movement speed threshold of a UE for which the model is available;
a UE computing power criterion and/or an electricity consumption criterion, where the UE computing power criterion and/or the electricity consumption criterion are used to indicate a capability requirement of a UE in which the model is available; or
a model application scenario, where the model application scenario is used to indicate a geographical coverage scenario in which the model is available.

In an embodiment of the present disclosure, the priority level information is represented by INTEGER, e.g., a positive integer of (1..X), where X is an integer greater than 1. For example, priority levels are ranked in a descending order, i.e., 1 represents a highest priority level and X represents a lowest priority level, or the priority levels are ranked in an ascending order, i.e., 1 represents a lowest priority level and X represents a highest priority level.

In an embodiment of the present disclosure, the information for the model selection includes the priority level information.

The selecting the model based on the information for the model selection includes:
in response to a first model being abnormal or not satisfying a use condition, falling back to a second model satisfying the use condition based on the priority level information, where the second model is a model that satisfies the use condition and has a second lowest priority level; or
falling back to a third model based on the priority level information, where the third model is a model that has a lowest priority level or a default model.

Illustratively, in an embodiment of the present disclosure, the use condition does not specifically refer to a fixed use condition. For example, in a case that a use application of a model changes, the use condition may change accordingly.

**In** an embodiment of the present disclosure, for example, the first model is a currently-used model, and it does not specifically refer to a fixed model. The word "first" is only used to differentiate the first model from the other models.

Illustratively, in an embodiment of the present disclosure, the second model is a model that satisfies the use condition and has the second lowest priority level, and it does not specifically refer to a fixed model. For example, in a case that the priority level information about models in a model set changes, the second model may change accordingly.

**In** an embodiment of the present disclosure, the third model is a model that has the lowest priority level or a default model.

Further, in an embodiment of the present disclosure, the information for the model selection includes the priority level information.

The selecting the model based on the information for the model selection includes:
in a case that at least one model in a model set satisfies the information for the model selection, selecting a model that has a highest priority level in the at least one model based on the priority level information. The information for the model selection includes at least one piece of information for the model selection except the priority level information.

In an embodiment of the present disclosure, the model set refers to a set including at least one model, and it does not specifically refer to a fixed set. For example, in a case that the quantity of models in the model set changes, the model set may change accordingly. For example, in a case that types of the models in the model set change, the model set may change accordingly.

In an embodiment of the present disclosure, the information for the model selection includes at least one piece of information for the model selection except the priority level information. There exists a plurality of pieces of information for the model selection, so the information for the model selection does not specifically refer to a fixed piece of information. For example, in a case that the quantity of pieces of information corresponding to the information for the model selection changes, the information for the model selection may change accordingly. For example, in a case that specific information corresponding to the information for the model selection changes, the information for the model selection may change accordingly.

Illustratively, in an embodiment of the present disclosure, the range information for the model selection includes a network identity (ID).

The network ID includes at least one of:
a Public Land Mobile Network (PLMN) list;
a Tracking Area Code (TAC) list;
a Radio Access Network (RAN) Notification Area (RNA);
a Next Generation (NG)-RAN node ID list;
a cell list; or
longitude and latitude information and/or height information.

Illustratively, in an embodiment of the present disclosure, in a case that a network where a UE is located satisfies a condition, a model corresponding to the condition is used, and in a case that the network where the UE is located does not satisfy the condition, the model corresponding to the condition is not used.

In an embodiment of the present disclosure, for example, the range information is an actual geographical area. For example, in a case that a geographical position of a UE is in the geographical area, a model corresponding to the geographical area is used, and in a case that the geographical position of the UE is not in the geographical area, the model corresponding to the geographical area is not used.

Illustratively, in an embodiment of the present disclosure, the range information for the model selection is longitude and latitude information. For example, the longitude and latitude information about a UE determined by the first node is 100°E and 40°N. In a case that the first node determines that a range of a model A covers the longitude and the latitude but a range of a model B does not covers the longitude and the latitude, the model A is selected by the first node.

Illustratively, in an embodiment of the present disclosure, the use time information is used to indicate time available for the model, and it may be a specific time range, i.e., a corresponding model is used within the designated time range. For example, the use time information may also be a specific duration, i.e., a model is stopped from being used in a case that the use time reaches the specific duration.

Illustratively, in an embodiment of the present disclosure, the status of the UE includes at least one of:
a Radio Resource Control (RRC)_CONNECTED state;
a RRC_INACTIVE state; or
a RRC_IDLE state.

In an embodiment of the present disclosure, in a specific network status, the UE uses a model corresponding to the network status, or different models correspond to different statuses of the UE.

In an embodiment of the present disclosure, function types include, but not limited to, positioning, CSI compression, beam management, etc.

In an embodiment of the present disclosure, for example, the event criterion refers to that an event related to mobility of the UE, e.g., an event A1, A2 or A3, is satisfied, or a handover-related signaling is sent by the UE.

Illustratively, in an embodiment of the present disclosure, the wireless environment-related threshold criterion includes at least one of:
signal intensity measured by the UE;
signal interference measured by the UE; or
uplink signal interference measured by a base station.

In an embodiment of the present disclosure, for example, in a case that the signal intensity measured by the UE is greater than a predetermined signal intensity threshold, a corresponding model is used, or in a case that the signal intensity measured by the UE is smaller than a signal intensity threshold, a corresponding model is used. For example, the signal intensity is Reference Signal Receiving Power (RSRP).

In an embodiment of the present disclosure, for example, the signal interference measured by the UE is Long Term Evolution (LTE) Reference Signal Receiving Quality (RSRQ). In a case that the RSRQ is greater than a predetermined RSRQ threshold, a corresponding model is used, or in a case that the RSRQ is smaller than a predetermined RSRQ threshold, a corresponding model is used.

In an embodiment of the present disclosure, for example, in a case that the uplink signal interference measured by the base station is greater than a predetermined uplink signal interference threshold, a corresponding model is used, or in a case that the uplink signal interference measured by the base station is smaller than a predetermined uplink signal interference threshold, a corresponding model is used.

Illustratively, in an embodiment of the present disclosure, the service-related criterion includes at least one of:
Protocol Data Unit (PDU) session information;
Quality of Service (QoS) flow information;
radio bearer information;
network slice information;
a Quality of Experience (QoE) threshold; or
a QoS threshold.

In an embodiment of the present disclosure, a corresponding model is used only in a case that the UE uses a corresponding PDU session and/or a corresponding network slice.

In an embodiment of the present disclosure, a corresponding model is used only in a case that QoE of the UE is smaller than a predetermined QoE threshold or greater than a predetermined QoE threshold.

Further, in an embodiment of the present disclosure, the QoE threshold refers to a value of at least one QoE metric measured in the QoE, or a QoE value obtained via QoE measurement and calculation, and it indicates an overall experience level of the QoE. For example, the QoE obtained via QoE measurement and calculation is a Mean Opinion Score (MOS).

In an embodiment of the present disclosure, a corresponding model is used only in a case that QoS of the UE is smaller than a predetermined QoS threshold or greater than a predetermined QoS threshold.

Further, in an embodiment of the present disclosure, for example, the QoS threshold refers to a throughput corresponding to a bearer, a time delay, and/or a packet loss value.

In an embodiment of the present disclosure, the model performance-related criterion is a specific inference accuracy threshold. A corresponding model is used in response to the accuracy being smaller than a predetermined accuracy threshold or greater than a predetermined accuracy threshold.

In an embodiment of the present disclosure, for example, the UE movement speed criterion is a specific speed threshold. A corresponding model is used in response to a speed of the UE is smaller than a predetermined speed threshold or greater than a predetermined speed threshold.

In an embodiment of the present disclosure, for example, the PDU session information is a PDU session list.

In an embodiment of the present disclosure, for example, the QoS flow information is a QoS flow ID list.

In an embodiment of the present disclosure, for example, the radio bearer information is a DRB list.

In an embodiment of the present disclosure, for example, the network slice information is a Single Network Slice Selection Assistance Information (S-NSSAI) list or a network slice group.

Illustratively, in an embodiment of the present disclosure, the UE computing power criterion includes a threshold of a utilization rate of a central processing unit (CPU).

**In** an embodiment of the present disclosure, a corresponding model is used in response to a current utilization rate of the CPU of the UE being smaller than a predetermined threshold or greater than a predetermined threshold.

**In** an embodiment of the present disclosure, for example, the electricity consumption criterion is a remaining electricity threshold. A corresponding model is used in response to current remaining electricity of the UE being smaller than a predetermined remaining electricity threshold or greater than a predetermined remaining electricity threshold.

**In** an embodiment of the present disclosure, the geographical coverage scenario includes, but not limited to, dense urban, urban, suburban, rural, indoor, etc.

Further, in an embodiment of the present disclosure, the information for the model selection is per model and/or per model ID.

In an embodiment of the present disclosure, the model ID is used to uniquely identify a model, i.e., one model only corresponds to one model ID.

In an embodiment of the present disclosure, for example, the information for the model selection is per model. For example, the information for the model selection is per model A.

In an embodiment of the present disclosure, for example, the information for the model selection is further per model ID. For example, an ID of a model A is 123456, and the information for the model selection is per 123456.

Further, in an embodiment of the present disclosure, the determining the information for the model selection includes:
receiving the information for the model selection sent by a second node.

Further, in an embodiment of the present disclosure, the first node and the second node are selected from at least one of:
the first node being a UE and the second node being a base station;
the first node being the UE and the second node being a core network node;
the first node being the base station and the second node being the core network node;
the first node being the base station and the second node being an Operation, Administration And Maintenance (OAM) node;
the first node being a target base station in a handover procedure and the second node being a source base station in the handover procedure;
the first node being a Master Node (MN) in a multi-connectivity scenario and the second node being a Secondary Node (SN) in the multi-connectivity scenario;
the first node being a new serving next generation node B (gNB) and the second node being a last serving gNB; or
the first node being a CU in separation architecture and the second node being a DU in the separation architecture.

Further, in an embodiment of the present disclosure, the receiving the information for the model selection sent by the second node includes at least one of:
in a case that the first node is the UE and the second node is the base station, receiving a RRC message sent by the second node, where the RRC message includes the information for the model selection;
in a case that the first node is the UE and the second node is the core network node, receiving a Non-Access Stratum (NAS) message sent by the second node, where the NAS message includes the information for the model selection;
in a case that the first node is the base station and the second node is the core network node, receiving a Next Generation Application Protocol (NGAP) message sent by the second node, where the NGAP message includes the information for the model selection;
in a case that the first node the base station and the second node is the OAM node, receiving the information for the model selection sent by the second node;
in a case that the first node is the target base station in the handover procedure and the second node is the source base station in the handover procedure, receiving an Xn Application Protocol (XnAP) message sent by the second node, where the XnAP message includes the information for the model selection;
in a case that the first node is the MN in the multi-connectivity scenario and the second node is the SN in the multi-connectivity scenario, receiving an XnAP message sent by the second node, where the XnAP message includes the information for the model selection;
in a case that the first node is the new serving gNB and the second node is the last serving gNB, receiving an XnAP message sent by the second node, where the XnAP message includes the information for the model selection; or
in a case that the first node is the CU in the separation architecture and the second node is the DU in the separation architecture, receiving an F1 Application Protocol (F1AP) message sent by the second node, where the F1AP message includes the information for the model selection.

In an embodiment of the present disclosure, for example, the multi-connectivity scenario includes a Dual Connectivity (DC) scenario.

In a case that the first node is the base station and the second node is the OAM node, the first node is a node of the base station, which includes, but not limited to, gNB-CU, gNB-DU, or gNB-CU-UP.

In an embodiment of the present disclosure, the method further includes:
in response to the model selection being completed, sending a model selection result to a third node.

Further, in an embodiment of the present disclosure, the first node and the third node are selected from at least one of:
the first node being a UE and the third node being a base station;
the first node being the UE and the third node being a core network node;
the first node being the base station and the third node being the UE;
the first node being a CU in separation architecture and the third node being a DU in the separation architecture;
the first node being the DU in the separation architecture and the third node being the CU in the separation architecture;
the first node being a MN in a multi-connectivity scenario and the third node being a SN in the multi-connectivity scenario; or
the first node being the SN in the multi-connectivity scenario and the third node being the MN in the multi-connectivity scenario.

Further, in an embodiment of the present disclosure, the sending the model selection result to the third node includes at least one of:
in a case that the first node is a UE and the third node is a base station, sending the model selection result to the third node via a RRC signaling and/or a lower layer signaling;
in a case that the first node is the UE and the third node is a core network node, sending the model selection result to the third node via a NAS signaling;
in a case that the first node is the base station and the third node is the UE, sending the model selection result to the third node via the RRC signaling and/or the lower layer signaling;
in a case that the first node is a CU in separation architecture and the third node is a DU in the separation architecture, sending an F1AP message to the third node, where the F1AP message includes the model selection result;
in a case that the first node is the DU in the separation architecture and the third node is the CU in the separation architecture, sending the F1AP message to the third node, where the F1AP message includes the model selection result;
in a case that the first node is a MN in a multi-connectivity scenario and the third node is a SN in the multi-connectivity scenario, sending an XnAP message to the third node, where the XnAP message includes the model selection result; or
in a case that the first node is the SN in the multi-connectivity scenario and the third node is the MN in the multi-connectivity scenario, sending the XnAP message to the third node, where the XnAP message includes the model selection result.

Illustratively, in an embodiment of the present disclosure, the model selection result includes ID information for identifying the model.

In an embodiment of the present disclosure, the lower layer signaling is a PDCP layer signaling, a RLC layer signaling, a MAC layer signaling, or a physical layer signaling.

Further, in a possible embodiment of the present disclosure, the PDCP layer signaling is a PDCP PDU. In a possible embodiment of the present disclosure, the RLC layer signaling is a RLC PDU. In a possible embodiment of the present disclosure, the MAC layer signaling is a Media Access Control-Control Element (MAC-CE), Downlink Control Information (DCI), Uplink Control Information (UCI), a random access request, or a random access feedback. In a possible embodiment of the present disclosure, the RRC layer signaling is a RRC message.

Further, in an embodiment of the present disclosure, the second node is the same as, or different from, the third node.

In a word, in the embodiments of the present disclosure, the information for the model selection is determined, and the model is selected based on the information for the model selection. In the embodiments of the present disclosure, a model selection mechanism is provided, so as to determine the information for the model selection, prevent the occurrence of the inaccurate model selection, and improve the model selection efficiency. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 4 is a flow chart of a model selection method according to an embodiment of the present disclosure, and this method is executed by a first node. As shown in FIG. 4, the method includes the following steps.

Step 401: in response to a first model being abnormal or not satisfying a use condition, the first node falls back to a second model satisfying the use condition based on priority level information, and the second model is a model that satisfies the use condition and has a second lowest priority level.

Alternatively, Step 402: the first node falls back to a third model based on the priority level information, and the third model is a model that has a lowest priority level or a default model.

**In** an embodiment of the present disclosure, information for model selection includes priority level information, and a priority level is used to indicate a model selection priority level and/or a fallback priority level.

**In** an embodiment of the present disclosure, the information for the model selection is per model and/or per model ID.

In an embodiment of the present disclosure, one of Step 401 and Step 402 may be executed. For example, in a case that Step 401 is executed by the first node, Step 402 is not to be executed, or in a case that Step 402 is executed by the first node, Step 401 is not to be executed.

Illustratively, in an embodiment of the present disclosure, the use condition does not specifically refer to a fixed use condition. For example, in a case that an application scenario of a model changes, the use condition may change accordingly.

In an embodiment of the present disclosure, for example, the first model is a currently-used model, and it does not specifically refer to a fixed model. The word "first" is only used to differentiate the first model from the other models.

Illustratively, in an embodiment of the present disclosure, the second model is a model that satisfies the use condition and has the second lowest priority level, and it does not specifically refer to a fixed model. For example, in a case that the priority level information about models in a model set changes, the second model may change accordingly.

In an embodiment of the present disclosure, the third model is a model having the lowest priority level or a default model.

In a word, in the embodiments of the present disclosure, in response to the first model being abnormal or not satisfying the use condition, the first node falls back to the second model that satisfies the use condition based on the priority level information, or falls back to the third model based on the priority level information. The second model is a model that satisfies the use condition and has the second lowest priority level, and the third model is a model that has the lowest priority level or a default model. In the embodiments of the present disclosure, a model selection mechanism is provided, so as to determine the information for the model selection, prevent the occurrence of the inaccurate model selection, and improve the model selection efficiency. To be specific, the present disclosure discloses a scheme about how to perform the model selection in a case that the first model is abnormal or does not satisfy the use condition. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

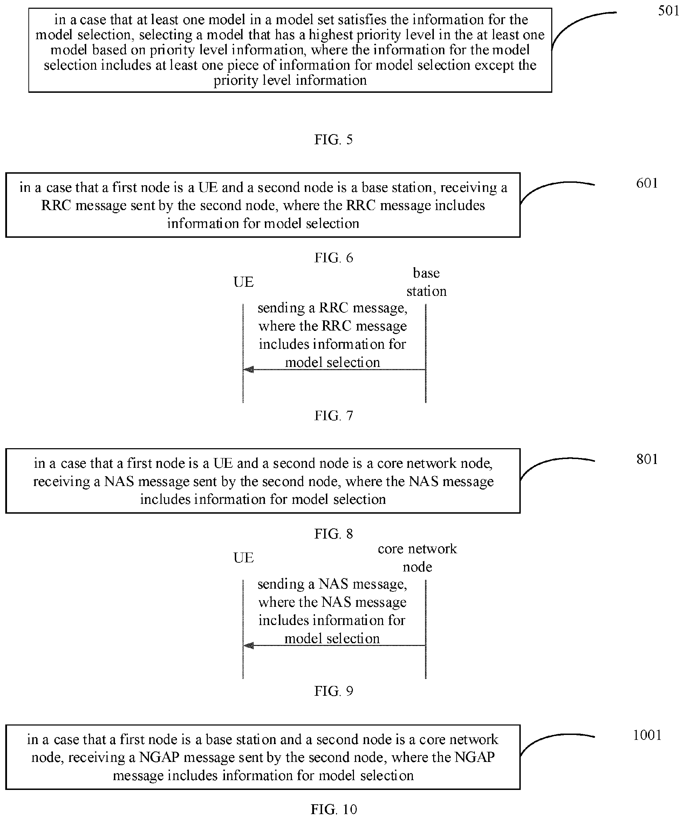

FIG. 5 is a flow chart of a model selection method according to an embodiment of the present disclosure, and this method is executed by a first node. As shown in FIG. 5, the method includes the following step.

Step 501: in a case that at least one model in a model set satisfies the information for the model selection, the first node selects a model that has a highest priority level in the at least one model based on priority level information. The information for the model selection includes at least one piece of information for model selection except the priority level information.

In an embodiment of the present disclosure, the information for the model selection includes the priority level information.

In an embodiment of the present disclosure, the information for the model selection is per model and/or per model ID.

In an embodiment of the present disclosure, the model set refers to a set including at least one model, and it does not specifically refer to a fixed set. For example, in a case that the quantity of models in the model set changes, the model set may change accordingly, or in a case that model types in the model set changes, the model set may change accordingly.

In an embodiment of the present disclosure, the information for the model selection includes at least one piece of information for the model selection except the priority level information. There exists a plurality of pieces of information for the model selection, so the information for the model selection does not specifically refer to a fixed piece of information. For example, in a case that the quantity of pieces of information corresponding to the information for the model selection changes, the information for the model selection may change accordingly. For example, in a case that specific information corresponding to the information for the model selection changes, the information for the model selection may change accordingly.

In a word, in the embodiments of the present disclosure, in a case that at least one model in the model set satisfies the information for the model selection, the first node selects a model that has the highest priority level in the at least one model based on the priority level information, and the information for the model selection includes at least one piece of information for the model selection except the priority level information. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for selecting the model from the model set. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 6 is a flow chart of a model selection method according to an embodiment of the present disclosure, and this method is executed by a first node. As shown in FIG. 6, the method includes the following step.

Step 601: in a case that the first node is a UE and a second node is a base station, a RRC message sent by the second node is received. The RRC message includes information for model selection.

FIG. 7 is a schematic view showing the interaction of the model selection method according to an embodiment of the present disclosure. As shown in FIG. 7, the UE receives the RRC message sent by the base station, and the RRC message includes the information for the model selection, i.e., the UE may determine the information for the model selection.

In an embodiment of the present disclosure, the information for the model selection includes at least one of:
priority level information, where a priority level is used to indicate a model selection priority level and/or a fallback priority level;
range information for the model selection, where the range information is used to indicate a range in which a model is available;
use time information, where the use time information is used to indicate time in a case the model is available;
UE status information, where the UE status information is used to indicate a status of a UE in a case that a model is available;
function type information, where the function type information is used to indicate a function for the model;
an event criterion, where the event criterion is used to indicate a specific event to be used by the model;
a wireless environment-related threshold criterion, where the wireless environment-related threshold criterion is used to indicate a wireless environment in which the model is available;
a service-related criterion, where the service-related criterion is used to indicate a specific service and/or a service experience for which the model is available;
a model performance-related criterion, where the model performance-related criterion is used to indicate a performance index for which the model is available;
a UE movement speed criterion, where the UE movement speed criterion is used to indicate a movement speed and/or a specific movement speed threshold of a UE for which the model is available;
a UE computing power criterion and/or an electricity consumption criterion, where the UE computing power criterion and/or the electricity consumption criterion are used to indicate a capability requirement of a UE in which the model is available; or
a model application scenario, where the model application scenario is used to indicate a geographical coverage scenario in which the model is available.

In a word, in the embodiments of the present disclosure, in a case that the first node is the UE and the second node is the base station, the first node receives the RRC message sent by the second node, and the RRC message includes the information for the model selection. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for determining the information for the model selection in a case that the first node is the UE and the second node is the base station. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 8 is a flow chart of a model selection method according to an embodiment of the present disclosure, and this method is executed by a first node. As shown in FIG. 8, the method includes the following step.

Step 801: in a case that the first node is a UE and a second node is a core network node, a NAS message sent by the second node is received. The NAS message includes information for model selection.

FIG. 9 is a schematic view showing the interaction of the model selection method according to an embodiment of the present disclosure. The UE receives the NAS message sent by the core network node, and the NAS message includes the information for the model selection, i.e., the UE may determine the information for the model selection.

In an embodiment of the present disclosure, the information for the model selection includes at least one of:
priority level information, where a priority level is used to indicate a model selection priority level and/or a fallback priority level;
range information for the model selection, where the range information is used to indicate a range in which a model is available;
use time information, where the use time information is used to indicate time in a case the model is available;
UE status information, where the UE status information is used to indicate a status of a UE in a case that a model is available;
function type information, where the function type information is used to indicate a function for the model;
an event criterion, where the event criterion is used to indicate a specific event to be used by the model;
a wireless environment-related threshold criterion, where the wireless environment-related threshold criterion is used to indicate a wireless environment in which the model is available;
a service-related criterion, where the service-related criterion is used to indicate a specific service and/or a service experience for which the model is available;
a model performance-related criterion, where the model performance-related criterion is used to indicate a performance index for which the model is available;
a UE movement speed criterion, where the UE movement speed criterion is used to indicate a movement speed and/or a specific movement speed threshold of a UE for which the model is available;
a UE computing power criterion and/or an electricity consumption criterion, where the UE computing power criterion and/or the electricity consumption criterion are used to indicate a capability requirement of a UE in which the model is available; or
a model application scenario, where the model application scenario is used to indicate a geographical coverage scenario in which the model is available.

In a word, in the embodiments of the present disclosure, in a case that the first node is the UE and the second node is the core network node, the first node receives the NAS message sent by the second node, and the NAS message includes the information for the model selection. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for determining the information for the model selection in a case that the first node is the UE and the second node is the code network node. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 10 is a flow chart of a model selection method according to an embodiment of the present disclosure, and this method is executed by a first node. As shown in FIG. 10, the method includes the following step.

Step 1001: in a case that the first node is a base station and a second node is a core network node, a NGAP message sent by the second node is received. The NGAP message includes information for model selection.

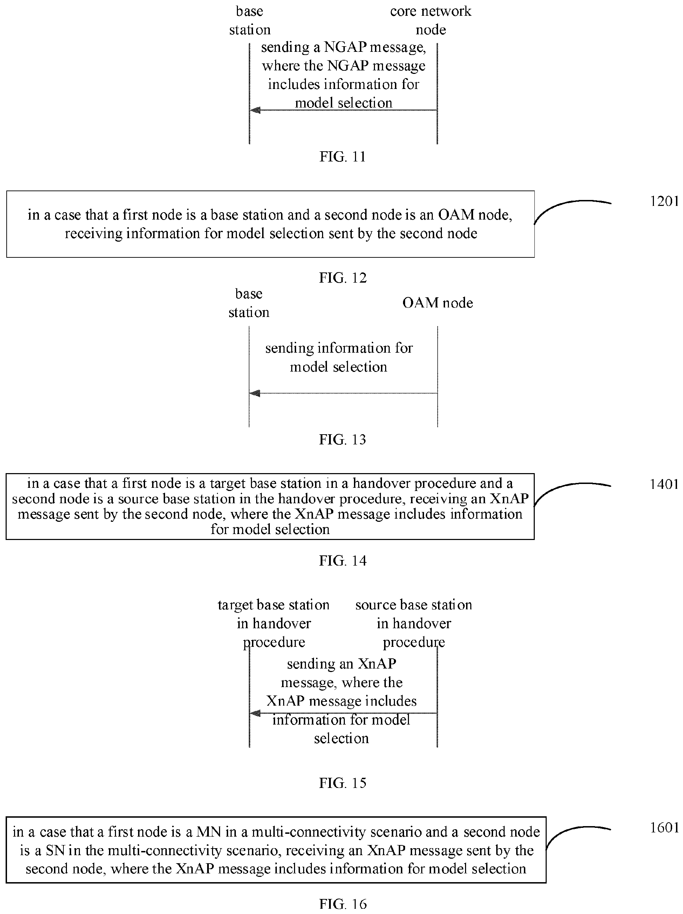

FIG. 11 is a schematic view showing the interaction of the model selection method according to an embodiment of the present disclosure. The base station receives the NGAP message sent by the core network node, and the NGAP message includes the information for the model selection, i.e., the UE may determine the information for the model selection.

In an embodiment of the present disclosure, the information for the model selection includes at least one of:
priority level information, where a priority level is used to indicate a model selection priority level and/or a fallback priority level;
range information for the model selection, where the range information is used to indicate a range in which a model is available;
use time information, where the use time information is used to indicate time in a case the model is available;
UE status information, where the UE status information is used to indicate a status of a UE in a case that a model is available;
function type information, where the function type information is used to indicate a function for the model;
an event criterion, where the event criterion is used to indicate a specific event to be used by the model;
a wireless environment-related threshold criterion, where the wireless environment-related threshold criterion is used to indicate a wireless environment in which the model is available;
a service-related criterion, where the service-related criterion is used to indicate a specific service and/or a service experience for which the model is available;
a model performance-related criterion, where the model performance-related criterion is used to indicate a performance index for which the model is available;
a UE movement speed criterion, where the UE movement speed criterion is used to indicate a movement speed and/or a specific movement speed threshold of a UE for which the model is available;
a UE computing power criterion and/or an electricity consumption criterion, where the UE computing power criterion and/or the electricity consumption criterion are used to indicate a capability requirement of a UE in which the model is available; or
a model application scenario, where the model application scenario is used to indicate a geographical coverage scenario in which the model is available.

In a word, in the embodiments of the present disclosure, in a case that the first node is the base station and the second node is the core network node, the first node receives the NGAP message sent by the second node, and the NGAP message includes the information for the model selection. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for determining the information for the model selection in a case that the first node is the base station and the second node is the code network node. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 12 is a flow chart of a model selection method according to an embodiment of the present disclosure, and this method is executed by a first node. As shown in FIG. 12, the method includes the following step.

Step 1201: in a case that the first node is a base station and a second node is an OAM node, information for model selection sent by the second node is received.

FIG. 13 is a schematic view showing the interaction of the model selection method according to an embodiment of the present disclosure. The base station receives the information for the model selection sent by the OAM node.

In an embodiment of the present disclosure, the information for the model selection includes at least one of:
priority level information, where a priority level is used to indicate a model selection priority level and/or a fallback priority level;
range information for the model selection, where the range information is used to indicate a range in which a model is available;
use time information, where the use time information is used to indicate time in a case the model is available;
UE status information, where the UE status information is used to indicate a status of a UE in a case that a model is available;
function type information, where the function type information is used to indicate a function for the model;
an event criterion, where the event criterion is used to indicate a specific event to be used by the model;
a wireless environment-related threshold criterion, where the wireless environment-related threshold criterion is used to indicate a wireless environment in which the model is available;
a service-related criterion, where the service-related criterion is used to indicate a specific service and/or a service experience for which the model is available;
a model performance-related criterion, where the model performance-related criterion is used to indicate a performance index for which the model is available;
a UE movement speed criterion, where the UE movement speed criterion is used to indicate a movement speed and/or a specific movement speed threshold of a UE for which the model is available;
a UE computing power criterion and/or an electricity consumption criterion, where the UE computing power criterion and/or the electricity consumption criterion are used to indicate a capability requirement of a UE in which the model is available; or
a model application scenario, where the model application scenario is used to indicate a geographical coverage scenario in which the model is available.

In a word, in the embodiments of the present disclosure, in a case that the first node is the base station and the second node is the OAM node, the first node receives the information for the model selection sent by the second node. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for determining the information for the model selection in a case that the first node is the base station and the second node is the OAM node. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 14 is a flow chart of a model selection method according to an embodiment of the present disclosure, and this method is executed by a first node. As shown in FIG. 14, the method includes the following step.

Step 1401: in a case that the first node is a target base station in a handover procedure and a second node is a source base station in the handover procedure, an XnAP message sent by the second node is received. The XnAP message includes information for model selection.

FIG. 15 is a schematic view showing the interaction of the model selection method according to an embodiment of the present disclosure. The target base station in the handover procedure receives the XnAP message sent by the source base station in the handover procedure, and the XnAP message includes the information for the model selection, i.e., the source base station in the handover procedure may determine the information for the model selection.

**In** an embodiment of the present disclosure, the information for the model selection includes at least one of:
priority level information, where a priority level is used to indicate a model selection priority level and/or a fallback priority level;
range information for the model selection, where the range information is used to indicate a range in which a model is available;
use time information, where the use time information is used to indicate time in a case the model is available;

UE status information, where the UE status information is used to indicate a status of a UE in a case that a model is available;
function type information, where the function type information is used to indicate a function for the model;
an event criterion, where the event criterion is used to indicate a specific event to be used by the model;
a wireless environment-related threshold criterion, where the wireless environment-related threshold criterion is used to indicate a wireless environment in which the model is available;
a service-related criterion, where the service-related criterion is used to indicate a specific service and/or a service experience for which the model is available;
a model performance-related criterion, where the model performance-related criterion is used to indicate a performance index for which the model is available;
a UE movement speed criterion, where the UE movement speed criterion is used to indicate a movement speed and/or a specific movement speed threshold of a UE for which the model is available;
a UE computing power criterion and/or an electricity consumption criterion, where the UE computing power criterion and/or the electricity consumption criterion are used to indicate a capability requirement of a UE in which the model is available; or
a model application scenario, where the model application scenario is used to indicate a geographical coverage scenario in which the model is available.

In a word, in the embodiments of the present disclosure, in a case that the first node is the target base station in the handover procedure and the second node is the source base station in the handover procedure, the first node receives the XnAP message sent by the second node, and the XnAP message includes the information for the model selection. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for determining the information for the model selection in a case that the first node is the target base station in the handover procedure and the second node is the source base station in the handover procedure. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 16 is a flow chart of a model selection method according to an embodiment of the present disclosure, and this method is executed by a first node. As shown in FIG. 16, the method includes the following step.

Step 1601: in a case that the first node is a MN in a multi-connectivity scenario and a second node is a SN in the multi-connectivity scenario, an XnAP message sent by the second node is received. The XnAP message includes information for model selection.

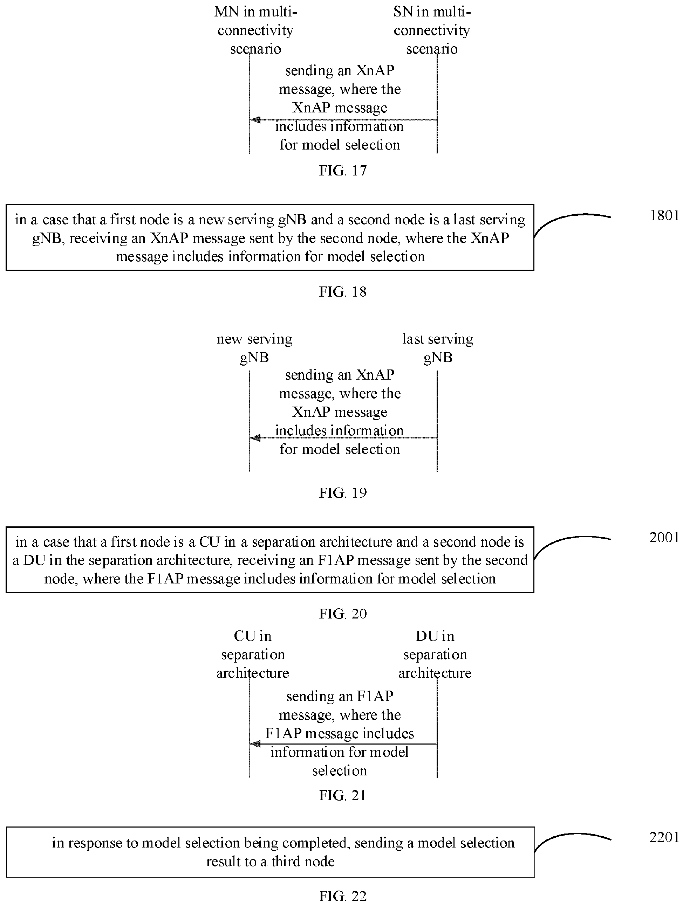

FIG. 17 is a schematic view showing the interaction of the model selection method according to an embodiment of the present disclosure. The MN in the multi-connectivity scenario receives the XnAP message sent by the SN in the multi-connectivity scenario, and the XnAP message includes the information for the model selection, i.e., the MN in the multi-connectivity scenario may determine the information for the model selection.

In an embodiment of the present disclosure, the information for the model selection includes at least one of:
priority level information, where a priority level is used to indicate a model selection priority level and/or a fallback priority level;
range information for the model selection, where the range information is used to indicate a range in which a model is available;
use time information, where the use time information is used to indicate time in a case the model is available;
UE status information, where the UE status information is used to indicate a status of a UE in a case that a model is available;
function type information, where the function type information is used to indicate a function for the model;
an event criterion, where the event criterion is used to indicate a specific event to be used by the model;
a wireless environment-related threshold criterion, where the wireless environment-related threshold criterion is used to indicate a wireless environment in which the model is available;
a service-related criterion, where the service-related criterion is used to indicate a specific service and/or a service experience for which the model is available;
a model performance-related criterion, where the model performance-related criterion is used to indicate a performance index for which the model is available;
a UE movement speed criterion, where the UE movement speed criterion is used to indicate a movement speed and/or a specific movement speed threshold of a UE for which the model is available;
a UE computing power criterion and/or an electricity consumption criterion, where the UE computing power criterion and/or the electricity consumption criterion are used to indicate a capability requirement of a UE in which the model is available; or
a model application scenario, where the model application scenario is used to indicate a geographical coverage scenario in which the model is available.

In a word, in the embodiments of the present disclosure, in a case that the first node is the MN in the multi-connectivity scenario and the second node is the SN in the multi-connectivity scenario, the first node receives the XnAP message sent by the second node, and the XnAP message includes the information for the model selection. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for determining the information for the model selection in a case that the first node is the MN in the multi-connectivity scenario and the second node is the SN in the multi-connectivity scenario. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 18 is a flow chart of a model selection method according to an embodiment of the present disclosure, and this method is executed by a first node. As shown in FIG. 18, the method includes the following step.

Step 1801: in a case that the first node is a new serving gNB and a second node is a last serving gNB, an XnAP message sent by the second node is received. The XnAP message includes information for model selection.

FIG. 19 is a schematic view showing the interaction of the model selection method according to an embodiment of the present disclosure. The new serving gNB receives the XnAP message sent by the last serving gNB, and the XnAP message includes the information for the model selection, i.e., the new serving gNB may determine the information for the model selection.

In an embodiment of the present disclosure, the information for the model selection includes at least one of:
priority level information, where a priority level is used to indicate a model selection priority level and/or a fallback priority level;
range information for the model selection, where the range information is used to indicate a range in which a model is available;
use time information, where the use time information is used to indicate time in a case the model is available;
UE status information, where the UE status information is used to indicate a status of a UE in a case that a model is available;
function type information, where the function type information is used to indicate a function for the model;
an event criterion, where the event criterion is used to indicate a specific event to be used by the model;
a wireless environment-related threshold criterion, where the wireless environment-related threshold criterion is used to indicate a wireless environment in which the model is available;
a service-related criterion, where the service-related criterion is used to indicate a specific service and/or a service experience for which the model is available;
a model performance-related criterion, where the model performance-related criterion is used to indicate a performance index for which the model is available;
a UE movement speed criterion, where the UE movement speed criterion is used to indicate a movement speed and/or a specific movement speed threshold of a UE for which the model is available;
a UE computing power criterion and/or an electricity consumption criterion, where the UE computing power criterion and/or the electricity consumption criterion are used to indicate a capability requirement of a UE in which the model is available; or
a model application scenario, where the model application scenario is used to indicate a geographical coverage scenario in which the model is available.

In a word, in the embodiments of the present disclosure, in a case that the first node is the new serving gNB and the second node is the last serving gNB, the first node receives the XnAP message sent by the second node, and the XnAP message includes the information for the model selection. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for determining the information for the model selection in a case that the first node is the new serving gNB and the second node is the last serving gNB. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 20 is a flow chart of a model selection method according to an embodiment of the present disclosure, and this method is executed by a first node. As shown in FIG. 20, the method includes the following step.

Step 2001: in a case that the first node is a CU in a separation architecture and a second node is a DU in the separation architecture, an F1AP message sent by the second node is received. The F1AP message includes information for model selection.

FIG. 21 is a schematic view showing the model selection method according to an embodiment of the present disclosure. The CU in the separation architecture receives the F1AP message sent by the DU in the separation architecture, and the F1AP message includes the information for the model selection, i.e., the CU in the separation architecture may determine the information for the model selection.

In an embodiment of the present disclosure, the information for the model selection includes at least one of:
priority level information, where a priority level is used to indicate a model selection priority level and/or a fallback priority level;
range information for the model selection, where the range information is used to indicate a range in which a model is available;
use time information, where the use time information is used to indicate time in a case the model is available;
UE status information, where the UE status information is used to indicate a status of a UE in a case that a model is available;
function type information, where the function type information is used to indicate a function for the model;
an event criterion, where the event criterion is used to indicate a specific event to be used by the model;
a wireless environment-related threshold criterion, where the wireless environment-related threshold criterion is used to indicate a wireless environment in which the model is available;
a service-related criterion, where the service-related criterion is used to indicate a specific service and/or a service experience for which the model is available;
a model performance-related criterion, where the model performance-related criterion is used to indicate a performance index for which the model is available;
a UE movement speed criterion, where the UE movement speed criterion is used to indicate a movement speed and/or a specific movement speed threshold of a UE for which the model is available;
a UE computing power criterion and/or an electricity consumption criterion, where the UE computing power criterion and/or the electricity consumption criterion are used to indicate a capability requirement of a UE in which the model is available; or
a model application scenario, where the model application scenario is used to indicate a geographical coverage scenario in which the model is available.

In a word, in the embodiments of the present disclosure, in a case that the first node is the CU in the separation architecture and the second node is the DU in the separation architecture, the first node receives the F1AP message sent by the second node, and the F1AP message includes the information for the model selection. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for determining the information for the model selection in a case that the first node is the CU in the separation architecture and the second node is the DU in the separation architecture. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 22 is a flow chart of a model selection method according to an embodiment of the present disclosure, and this method is executed by a first node. As shown in FIG. 22, the method includes the following step.

Step 2201: in response to model selection being completed, a model selection result is sent to a third node.

In an embodiment of the present disclosure, the first node and the third node are selected from at least one of:
the first node being a UE and the third node being a base station;
the first node being the UE and the third node being a core network node;
the first node being the base station and the third node being the UE;
the first node being a CU in a separation architecture and the third node being a DU in the separation architecture;
the first node being the DU in the separation architecture and the third node being the CU in the separation architecture;
the first node being a MN in a multi-connectivity scenario and the third node being a SN in the multi-connectivity scenario; or
the first node being the SN in the multi-connectivity scenario and the third node being the MN in the multi-connectivity scenario.
In an embodiment of the present disclosure, the sending the model selection result to the third node includes at least one of:
in a case that the first node is a UE and the third node is a base station, sending the model selection result to the third node via a RRC signaling and/or a lower layer signaling;
in a case that the first node is the UE and the third node is a core network node, sending the model selection result to the third node via a NAS signaling;
in a case that the first node is the base station and the third node is the UE, sending the model selection result to the third node via the RRC signaling and/or the lower layer signaling;
in a case that the first node is a CU in a separation architecture and the third node is a DU in the separation architecture, sending an F1AP message to the third node, where the F1AP message includes the model selection result;
in a case that the first node is the DU in the separation architecture and the third node is the CU in the separation architecture, sending the F1AP message to the third node, where the F1AP message includes the model selection result;
in a case that the first node is a MN in a multi-connectivity scenario and the third node is a SN in the multi-connectivity scenario, sending an XnAP message to the third node, where the XnAP message includes the model selection result; or
in a case that the first node is the SN in the multi-connectivity scenario and the third node is the MN in the multi-connectivity scenario, sending the XnAP message to the third node, where the XnAP message includes the model selection result.

In an embodiment of the present disclosure, the model selection result includes ID information for identifying a model.

In a word, in the embodiments of the present disclosure, in response to the model selection being completed, the model selection result is sent to the third node. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for performing the model selection and synchronization in the separation architecture or multi-connectivity scenario via sending the model selection result to the third node in response to the model selection being completed and enabling the third node to perform a relevant operation. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

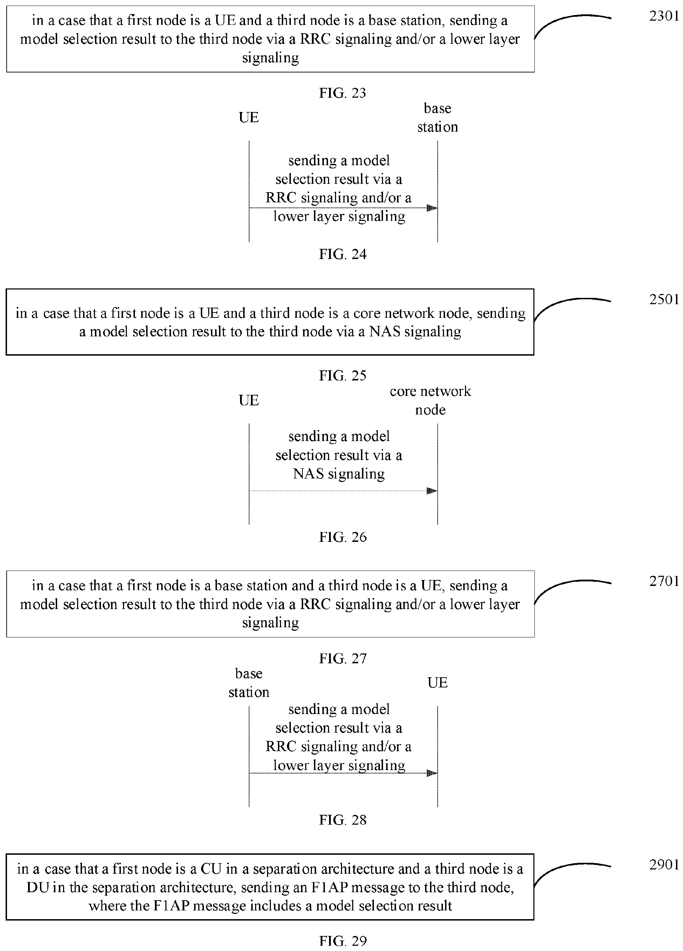

FIG. 23 is a flow chart of a model selection method according to an embodiment of the present disclosure, and this method is executed by a first node. As shown in FIG. 23, the method includes the following step.

Step 2301: in a case that the first node is a UE and a third node is a base station, a model selection result is sent to the third node via a RRC signaling and/or a lower layer signaling.

FIG. 24 is a schematic view showing the interaction of the model selection method according to an embodiment of the present disclosure. The UE sends the model selection result to the base station via the RRC signaling and/or the lower layer signaling.

In an embodiment of the present disclosure, the model selection result includes ID information for identifying a model.

In a word, in an embodiment of the present disclosure, in a case that the first node is the UE and the third node is the base station, the model selection result is sent to the third node via the RRC signaling and/or the lower layer signaling. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for sending the model selection result to the third node in a case that the first node is the UE and the third node is the base station. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 25 is a flow chart of a model selection method according to an embodiment of the present disclosure, and this method is executed by a first node. As shown in FIG. 25, the method includes the following step.

Step 2501: in a case that the first node is a UE and a third node is a core network node, a model selection result is sent to the third node via a NAS signaling.

FIG. 26 is a schematic view showing the interaction of the model selection method according to an embodiment of the present disclosure. The UE sends the model selection result to the core network node via the NAS signaling.

In an embodiment of the present disclosure, the model selection result includes ID information for identifying a model.

In a word, in an embodiment of the present disclosure, in a case that the first node is the UE and the third node is the core network node, the model selection result is sent to the third node via the NAS signaling. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for sending the model selection result to the third node in a case that the first node is the UE and the third node is the core network node. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 27 is a flow chart of a model selection method according to an embodiment of the present disclosure, and this method is executed by a first node. As shown in FIG. 27, the method includes the following step.

Step 2701: in a case that the first node is a base station and a third node is a UE, a model selection result is sent to the third node via a RRC signaling and/or a lower layer signaling.

FIG. 28 is a schematic view showing the interaction of the model selection method according to an embodiment of the present disclosure. The base station sends the model selection result to the UE via the RRC signaling and/or the lower layer signaling.

In an embodiment of the present disclosure, the model selection result includes ID information for identifying a model.

In a word, in an embodiment of the present disclosure, in a case that the first node is the base station and the third node is the UE, the model selection result is sent to the third node via the RRC signaling and/or the lower layer signaling. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for sending the model selection result to the third node in a case that the first node is the base station and the third node is the UE. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 29 is a flow chart of a model selection method according to an embodiment of the present disclosure, and this method is executed by a first node. As shown in FIG. 29, the method includes the following step.

Step 2901: in a case that the first node is a CU in a separation architecture and a third node is a DU in the separation architecture, an F1AP message is sent to the third node. The F1AP message includes a model selection result.

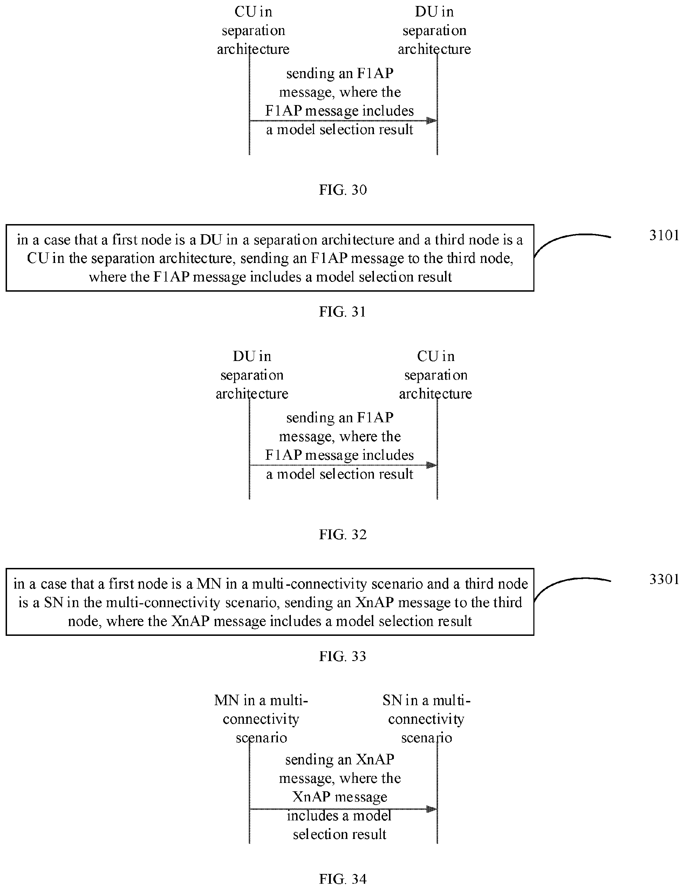

FIG. 30 is a schematic view showing the interaction of the model selection method according to an embodiment of the present disclosure. The CU in the separation architecture sends the F1AP message to the DU in the separation architecture, and the F1AP message includes the model selection result, i.e., the CU in the separation architecture may send the model selection result to the DU in the separation architecture.

In an embodiment of the present disclosure, the model selection result includes ID information for identifying a model.

In a word, in an embodiment of the present disclosure, in a case that the first node is the CU in the separation architecture and the third node is the DU in the separation architecture, the F1AP message is sent to the third node, and the F1AP message includes the model selection result. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for sending the model selection result to the third node in a case that the first node is the CU in the separation architecture and the third node is the DU in the separation architecture. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 31 is a flow chart of a model selection method according to an embodiment of the present disclosure, and this method is executed by a first node. As shown in FIG. 31, the method includes the following step.

Step 3101: in a case that the first node is a DU in a separation architecture and a third node is a CU in the separation architecture, an F1AP message is sent to the third node. The F1AP message includes a model selection result.

FIG. 32 is a schematic view showing the interaction of the model selection method according to an embodiment of the present disclosure. The DU in the separation architecture sends the F1AP message to the CU in the separation architecture, and the F1AP message includes the model selection result, i.e., the DU in the separation structure may send the model selection result to the CU in the separation architecture.

In an embodiment of the present disclosure, the model selection result includes ID information for identifying a model.

In a word, in an embodiment of the present disclosure, in a case that the first node is the DU in the separation architecture and the third node is the CU in the separation architecture, the F1AP message is sent to the third node, and the F1AP message includes the model selection result. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for sending the model selection result to the third node in a case that the first node is the DU in the separation architecture and the third node is the CU in the separation architecture. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 33 is a flow chart of a model selection method according to an embodiment of the present disclosure, and this method is executed by a first node. As shown in FIG. 33, the method includes the following step.

Step 3301: in a case that the first node is a MN in a multi-connectivity scenario and a third node is a SN in the multi-connectivity scenario, an XnAP message is sent to the third node. The XnAP message includes a model selection result.

FIG. 34 is a schematic view showing the interaction of the model selection method according to an embodiment of the present disclosure. The MN in the multi-connectivity scenario sends the XnAP message to the SN in the multi-connectivity scenario, and the XnAP message includes the model selection result, i.e., the MN in the multi-connectivity scenario may send the model selection result to the SN in the multi-connectivity scenario.

In an embodiment of the present disclosure, the model selection result includes ID information for identifying a model.

In a word, in an embodiment of the present disclosure, in a case that the first node is the MN in the multi-connectivity scenario and the third node is the SN in the multi-connectivity scenario, the XnAP message is sent to the third node, and the XnAP message includes the model selection result. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for sending the model selection result to the third node in a case that the first node is the MN in the multi-connectivity scenario and the third node is the SN in the multi-connectivity scenario. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

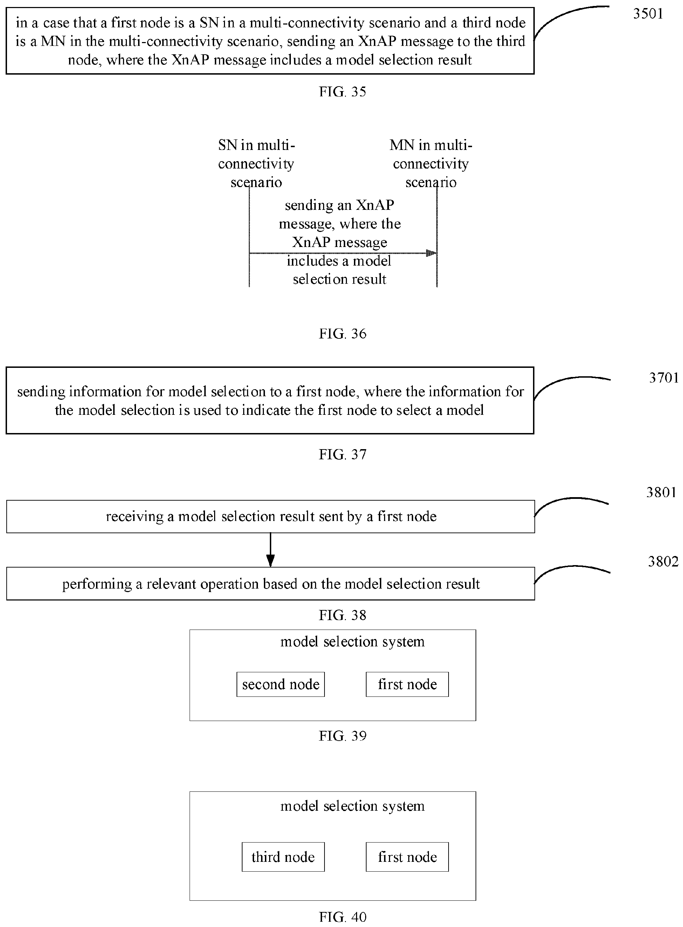

FIG. 35 is a flow chart of a model selection method according to an embodiment of the present disclosure, and this method is executed by a first node. As shown in FIG. 35, the method includes the following step.

Step 3501: in a case that the first node is a SN in a multi-connectivity scenario and a third node is a MN in the multi-connectivity scenario, an XnAP message is sent to the third node. The XnAP message includes a model selection result.

FIG. 36 is a schematic view showing the interaction of the model selection method according to an embodiment of the present disclosure. The SN in the multi-connectivity scenario sends the XnAP message to the MN in the multi-connectivity scenario, and the XnAP message includes the model selection result, i.e., the SN in the multi-connectivity scenario sends the model selection result to the MN in the multi-connectivity scenario.

In an embodiment of the present disclosure, the model selection result includes ID information for identifying a model.

In a word, in an embodiment of the present disclosure, in a case that the first node is the SN in the multi-connectivity scenario and the third node is the MN in the multi-connectivity scenario, the XnAP message is sent to the third node, and the XnAP message includes the model selection result. In the embodiments of the present disclosure, a model selection mechanism is provided, so as to determine the information for the model selection, prevent the occurrence of the inaccurate model selection, and improve the model selection efficiency. To be specific, the present disclosure discloses a scheme for sending the model selection result to the third node in a case that the first node is the SN in the multi-connectivity scenario and the third node is the MN in the multi-connectivity scenario. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

FIG. 37 is a flow chart of a model selection method according to an embodiment of the present disclosure, and this method is executed by a second node. As shown in FIG. 37, the method includes the following step.

Step 3701: information for model selection is sent to a first node. The information for the model selection is used to indicate the first node to select a model.

In an embodiment of the present disclosure, the information for the model selection includes at least one of:
priority level information, where a priority level is used to indicate a model selection priority level and/or a fallback priority level;
range information for the model selection, where the range information is used to indicate a range in which a model is available;
use time information, where the use time information is used to indicate time in a case the model is available;
UE status information, where the UE status information is used to indicate a status of a UE in a case that a model is available;
function type information, where the function type information is used to indicate a function for the model;
an event criterion, where the event criterion is used to indicate a specific event to be used by the model;
a wireless environment-related threshold criterion, where the wireless environment-related threshold criterion is used to indicate a wireless environment in which the model is available;
a service-related criterion, where the service-related criterion is used to indicate a specific service and/or a service experience for which the model is available;
a model performance-related criterion, where the model performance-related criterion is used to indicate a performance index for which the model is available;
a UE movement speed criterion, where the UE movement speed criterion is used to indicate a movement speed and/or a specific movement speed threshold of a UE for which the model is available;
a UE computing power criterion and/or an electricity consumption criterion, where the UE computing power criterion and/or the electricity consumption criterion are used to indicate a capability requirement of a UE in which the model is available; or
a model application scenario, where the model application scenario is used to indicate a geographical coverage scenario in which the model is available.

In an embodiment of the present disclosure, the range information for the model selection includes a network ID.

The network ID includes at least one of:
a PLMN list;
a TAC list;
a RNA;
a NG-RAN node ID list;
a cell list; or
longitude and latitude information and/or height information.

In an embodiment of the present disclosure, the status of the UE includes at least one of:
a RRC_CONNECTED state;
a RRC_INACTIVE state; or
a RRC_IDLE state.

In an embodiment of the present disclosure, the wireless environment-related threshold criterion includes at least one of:
signal intensity measured by the UE;
signal interference measured by the UE; or
uplink signal interference measured by a base station.

In an embodiment of the present disclosure, the service-related criterion includes at least one of:
PDU session information;
QoS flow information;
radio bearer information;
network slice information;
a QoE threshold; or
a QoS threshold.

In an embodiment of the present disclosure, the UE computing power criterion includes a threshold of a utilization rate of a CPU.

In an embodiment of the present disclosure, the information for the model selection is per model and/or per model ID.

In a word, in the embodiments of the present disclosure, the information for the model selection is sent to the first node, and the information for the model selection is used to indicate the first node to select the model. In the embodiments of the present disclosure, a model selection mechanism is provided, so as to determine the information for the model selection, prevent the occurrence of the inaccurate model selection, and improve the model selection efficiency. A processing method is provided with respect to "model selection", so as to send the information for the model selection to the first node for the model selection, reduce a model selection duration, reduce the quantity of nodes participating in the model selection, prevent the occurrence of inaccurate model selection due to different inference nodes, and improve the efficiency and accuracy of the model selection.

FIG. 38 is a flow chart of a model selection method according to an embodiment of the present disclosure, and this method is executed by a third node. As shown in FIG. 38, the method includes the following steps.

Step 3801: a model selection result sent by a first node is received.

Step 3802: a relevant operation is performed based on the model selection result.

In an embodiment of the present disclosure, the model selection result includes ID information for identifying a model.

In a word, in the embodiments of the present disclosure, the third node receives the model selection result sent by the first node, and performs the relevant operation based on the model selection result. In the embodiments of the present disclosure, a model selection mechanism is provided, and the model selection result is sent to the third node, so that the third node performs the relevant operation. A processing method is provided with respect to "model selection", so as to perform the relevant operation based on the model selection result sent by the first node, reduce a model selection duration, reduce the quantity of nodes participating in the model selection, prevent the occurrence of inaccurate model selection due to different inference nodes, and improve the efficiency and accuracy of the model selection.

FIG. 39 is a schematic view showing a model selection system according to an embodiment of the present disclosure. As shown in FIG. 39, the system includes:
a second node configured to send information for model selection to a first node; and
the first node configured to receive the information for the model selection sent by the second node, and
the first node configured to select a model based on the information for the model selection.

In a word, in an embodiment of the present disclosure, the second node sends the information for the model selection to the first node, and the first node receives the information for the model selection sent by the second node and selects the model based on the information for the model selection. In the embodiments of the present disclosure, a model selection mechanism is provided, and through the interaction of the information for the model selection, it is able to prevent the occurrence of the inaccurate model selection, and improve the model selection efficiency. A processing method is provided with respect to "model selection", so as to send the information for the model selection to the first node for the model selection, reduce a model selection duration, reduce the quantity of nodes participating in the model selection, prevent the occurrence of inaccurate model selection due to different inference nodes, and improve the efficiency and accuracy of the model selection.

FIG. 40 is a schematic view showing a model selection system according to an embodiment of the present disclosure. As shown in FIG. 40, the system includes:
a first node configured to: determine information for model selection,
select a model based on the information for the model selection, and
send a model selection result to a third node; and
the third node configured to receive the model selection result sent by the first node,
and the third node configured to perform a relevant operation based on the model selection result.

In a word, in an embodiment of the present disclosure, the first node determines the information for the model selection, selects the model based on the information for the model selection, and sends the model selection result to the third node. The third node receives the model selection result sent by the first node, and performs the relevant operation based on the model selection result. In the embodiments of the present disclosure, a model selection mechanism is provided, and the model selection result is sent to the third node so that the third node performs the relevant operation. A processing method is provided with respect to "model selection", so as to perform the relevant operation based on the model selection result sent by the first node, reduce a model selection duration, reduce the quantity of nodes participating in the model selection, prevent the occurrence of inaccurate model selection due to different inference nodes, and improve the efficiency and accuracy of the model selection.

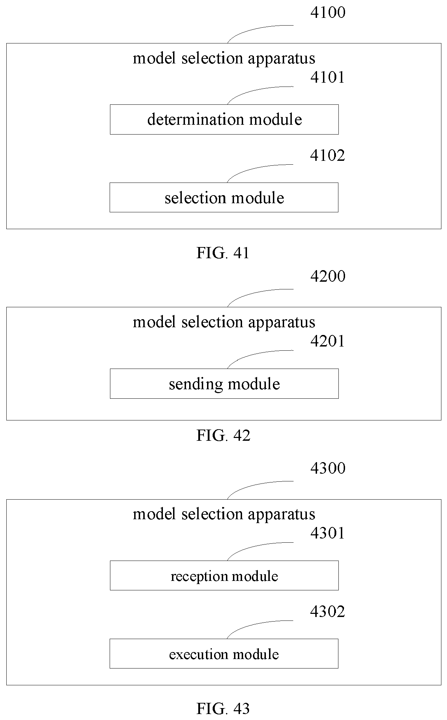

FIG. 41 is a schematic view showing a model selection apparatus according to an embodiment of the present disclosure. As shown in FIG. 41, the model selection apparatus 4100 is applied to a first node, and includes a determination module 4101 and a selection module 4102.

The determination module 4101 is configured to determine information for model selection.

The selection module 4102 is configured to select a model based on the information for the model selection.

In a word, in the model selection apparatus according to the embodiments of the present disclosure, the determination module determines the information for the model selection, and the selection module selects the model based on the information for the model selection. In the embodiments of the present disclosure, a model selection mechanism is provided, so as to determine the information for the model selection, prevent the occurrence of the inaccurate model selection, and improve the model selection efficiency. A processing method is provided with respect to "model selection", so as to perform the model selection based on the information for the model selection, reduce a model selection duration, reduce the quantity of nodes participating in the model selection, prevent the occurrence of inaccurate model selection due to different inference nodes, and improve the efficiency and accuracy of the model selection.

In a possible embodiment of the present disclosure, the information for the model selection includes at least one of:
priority level information, where a priority level is used to indicate a model selection priority level and/or a fallback priority level;
range information for the model selection, where the range information is used to indicate a range in which a model is available;
use time information, where the use time information is used to indicate time in a case the model is available;
UE status information, where the UE status information is used to indicate a status of a UE in a case that a model is available;
function type information, where the function type information is used to indicate a function for the model;
an event criterion, where the event criterion is used to indicate a specific event to be used by the model;
a wireless environment-related threshold criterion, where the wireless environment-related threshold criterion is used to indicate a wireless environment in which the model is available;
a service-related criterion, where the service-related criterion is used to indicate a specific service and/or a service experience for which the model is available;
a model performance-related criterion, where the model performance-related criterion is used to indicate a performance index for which the model is available;
a UE movement speed criterion, where the UE movement speed criterion is used to indicate a movement speed and/or a specific movement speed threshold of a UE for which the model is available;
a UE computing power criterion and/or an electricity consumption criterion, where the UE computing power criterion and/or the electricity consumption criterion are used to indicate a capability requirement of a UE in which the model is available; or
a model application scenario, where the model application scenario is used to indicate a geographical coverage scenario in which the model is available.

In a possible embodiment of the present disclosure, the information for the model selection includes the priority level information.

In a case of selecting the model based on the information for the model selection, the selection module 4102 is specifically configured to:
in response to a first model being abnormal or not satisfying a use condition, fall back to a second model satisfying the use condition based on the priority level information, where the second model is a model that satisfies the use condition and has a second lowest priority level; or
fall back to a third model based on the priority level information, where the third model is a model that has a lowest priority level or a default model.

In a possible embodiment of the present disclosure, the information for the model selection includes the priority level information.

In a case of selecting the model based on the information for the model selection, the selection module 4102 is specifically configured to:
in a case that at least one model in a model set satisfies the information for the model selection, select a model that has a highest priority level in the at least one model based on the priority level information. The information for the model selection includes at least one piece of information for the model selection except the priority level information.

In a possible embodiment of the present disclosure, the range information for the model selection includes a network ID.

The network ID includes at least one of:
a PLMN list;
a TAC list;
a RNA;
a NG-RAN node ID list;
a cell list; or
longitude and latitude information and/or height information.

In a possible embodiment of the present disclosure, the status of the UE includes at least one of:
a RRC_CONNECTED state;
a RRC_INACTIVE state; or
a RRC_IDLE state.

In a possible embodiment of the present disclosure, the wireless environment-related threshold criterion includes at least one of:
signal intensity measured by the UE;
signal interference measured by the UE; or
uplink signal interference measured by a base station.

In a possible embodiment of the present disclosure, the service-related criterion includes at least one of:
PDU session information;
QoS flow information;
radio bearer information;
network slice information;
a QoE threshold; or
a QoS threshold.

In a possible embodiment of the present disclosure, the UE computing power criterion includes a threshold of a utilization rate of a CPU.

In a possible embodiment of the present disclosure, the information for the model selection is per model and/or per model ID.

In a possible embodiment of the present disclosure, in a case of determining the information for the model selection, the determination module 4101 is specifically configured to:
receive the information for the model selection sent by a second node.

In a possible embodiment of the present disclosure, the first node and the second node are selected from at least one of:
the first node being a UE and the second node being a base station;
the first node being the UE and the second node being a core network node;
the first node being the base station and the second node being the core network node;
the first node being the base station and the second node being an OAM node;
the first node being a target base station in a handover procedure and the second node being a source base station in the handover procedure;
the first node being a MN in a multi-connectivity scenario and the second node being a SN in the multi-connectivity scenario;
the first node being a new serving gNB and the second node being a last serving gNB; or
the first node being a CU in a separation architecture and the second node being a DU in the separation architecture.

In a possible embodiment of the present disclosure, in a case of receiving the information for the model selection sent by the second node, the determination module 4101 is specifically configured to perform at least one of:
in a case that the first node is the UE and the second node is the base station, receiving a RRC message sent by the second node, where the RRC message includes the information for the model selection;
in a case that the first node is the UE and the second node is the core network node, receiving a NAS message sent by the second node, where the NAS message includes the information for the model selection;
in a case that the first node is the base station and the second node is the core network node, receiving a NGAP message sent by the second node, where the NGAP message includes the information for the model selection;
in a case that the first node the base station and the second node is the OAM node, receiving the information for the model selection sent by the second node;
in a case that the first node is the target base station in the handover procedure and the second node is the source base station in the handover procedure, receiving an XnAP message sent by the second node, where the XnAP message includes the information for the model selection;
in a case that the first node is the MN in the multi-connectivity scenario and the second node is the SN in the multi-connectivity scenario, receiving an XnAP message sent by the second node, where the XnAP message includes the information for the model selection;
in a case that the first node is the new serving gNB and the second node is the last serving gNB, receiving an XnAP message sent by the second node, where the XnAP message includes the information for the model selection; or
in a case that the first node is the CU in the separation architecture and the second node is the DU in the separation architecture, receiving an F1AP message sent by the second node, where the F1AP message includes the information for the model selection.

In a possible embodiment of the present disclosure, the determination module 4101 is further configured to:
in response to the model selection being completed, sending a model selection result to a third node.

In a possible embodiment of the present disclosure, the first node and the third node are selected from at least one of:
the first node being a UE and the third node being a base station;
the first node being the UE and the third node being a core network node;
the first node being the base station and the third node being the UE;
the first node being a CU in a separation architecture and the third node being a DU in the separation architecture;
the first node being the DU in the separation architecture and the third node being the CU in the separation architecture;
the first node being a MN in a multi-connectivity scenario and the third node being a SN in the multi-connectivity scenario; or
the first node being the SN in the multi-connectivity scenario and the third node being the MN in the multi-connectivity scenario.

In a possible embodiment of the present disclosure, in a case of sending the model selection result to the third node, the determination module 4101 is specifically configured to perform at least one of:
in a case that the first node is a UE and the third node is a base station, sending the model selection result to the third node via a RRC signaling and/or a lower layer signaling;
in a case that the first node is the UE and the third node is a core network node, sending the model selection result to the third node via a NAS signaling;
in a case that the first node is the base station and the third node is the UE, sending the model selection result to the third node via the RRC signaling and/or the lower layer signaling;
in a case that the first node is a CU in a separation architecture and the third node is a DU in the separation architecture, sending an F1 AP message to the third node, where the F1AP message includes the model selection result;
in a case that the first node is the DU in the separation architecture and the third node is the CU in the separation architecture, sending the F1AP message to the third node, where the F1AP message includes the model selection result;
in a case that the first node is a MN in a multi-connectivity scenario and the third node is a SN in the multi-connectivity scenario, sending an XnAP message to the third node, where the XnAP message includes the model selection result; or
in a case that the first node is the SN in the multi-connectivity scenario and the third node is the MN in the multi-connectivity scenario, sending the XnAP message to the third node, where the XnAP message includes the model selection result.

In a possible embodiment of the present disclosure, the model selection result includes ID information for identifying a model.

FIG. 42 is a schematic view showing a model selection apparatus according to an embodiment of the present disclosure. As shown in FIG. 42, the model selection apparatus 4200 is applied to a second node, and includes a transmission module 4201.

The transmission module 4201 is configured to send information for model selection to a first node. The information for the model selection is used to indicate the first node to select a model.

In a word, in the model selection apparatus according to the embodiments of the present disclosure, the transmission module sends the information for the model selection to the first node, and the information for the model selection is used to indicate the first node to select the model. In the embodiments of the present disclosure, a model selection mechanism is provided, and through the interaction of the information for the model selection, it is able to prevent the occurrence of the inaccurate model selection, and improve the model selection efficiency. A processing method is provided with respect to "model selection", so as to send the information for the model selection to the first node for the model selection, reduce a model selection duration, reduce the quantity of nodes participating in the model selection, prevent the occurrence of inaccurate model selection due to different inference nodes, and improve the efficiency and accuracy of the model selection.

FIG. 43 is a schematic view showing a model selection apparatus according to an embodiment of the present disclosure. As shown in FIG. 43, the model selection apparatus 4300 is applied to a third node, and includes a reception module 4301 and an execution module 4302.

The reception module 4301 is configured to receive a model selection result sent by a first node, and
the execution module 4302 is configured to perform a relevant operation based on the model selection result.

In a word, in the model selection apparatus according to the embodiments of the present disclosure, the reception module receives the model selection result sent by the first node, and the execution module performs the relevant operation based on the model selection result. In the embodiments of the present disclosure, a model selection mechanism is provided, and the model selection result is sent to the third node, so that the third node performs the relevant operation. A processing method is provided with respect to "model selection", so as to perform the relevant operation based on the model selection result sent by the first node, reduce a model selection duration, reduce the quantity of nodes participating in the model selection, prevent the occurrence of inaccurate model selection due to different inference nodes, and improve the efficiency and accuracy of the model selection.

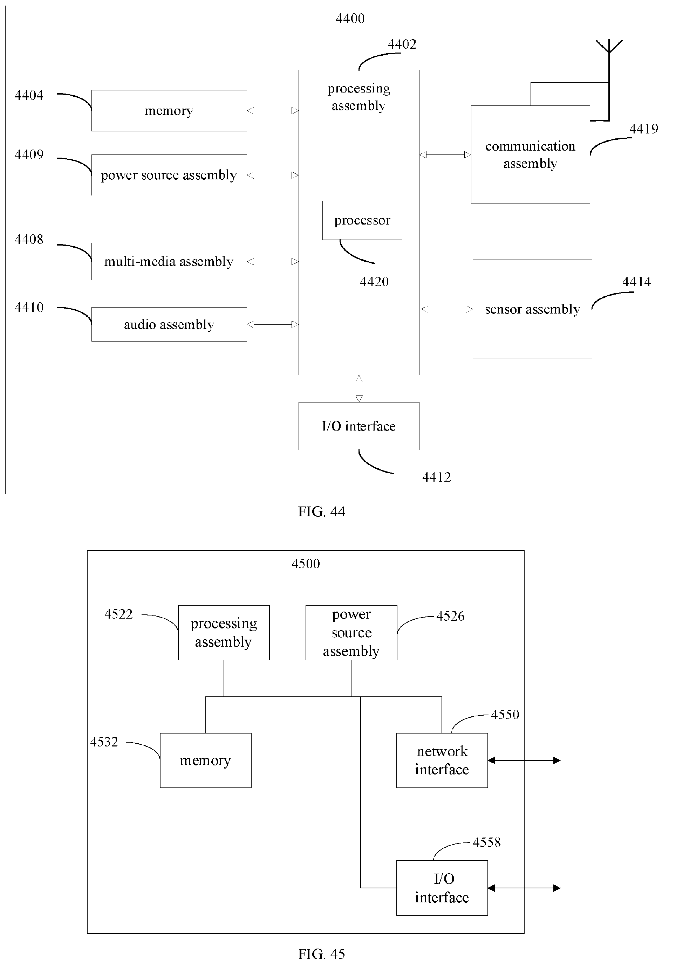

FIG. 44 is a block diagram of a UE 4400 according to an embodiment of the present disclosure. For example, the UE 4400 is a mobile phone, a computer, a digital broadcasting terminal device, a message transceiver device, a game console, a flat-panel device, medical equipment, fitness equipment, or a personal digital assistant.

Referring to FIG. 44, the UE 4400 includes at least one assembly selected from the group consisting of a processing assembly 4402, a memory 4404, a power source assembly 4406, a multi-media assembly 4408, an audio assembly 4410, an Input/Output (I/O) interface 4412, a sensor assembly 4414, and a communication assembly 4416.

Generally, the processing assembly 4402 controls an entire operation of the UE 4400, e.g., operations associated with display, phone call, data communication, camera operation and recording operation. The processing assembly 4402 includes at least one processor 4420 to execute an instruction, so as to implement all of, or a part of, the steps of the above-mentioned method. In addition, the processing assembly 4402 includes at least one module for the interaction between the processing assembly 4402 and the other assembly. For example, the processing assembly 4402 includes a multi-media module for the interaction between the multi-media assembly 4408 and the processing assembly 4402.

The memory 4404 is configured to store therein various types of data to support the operation of the UE 4400. Examples of such data include instructions for any application or method operated on the UE 4400, contact data, phonebook data, messages, pictures, video, etc. The memory 804 may be implemented in the form of any type of volatile or non-volatile memory devices, or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic disk, or an optical disk.

The power source assembly 4406 provides power to various assemblies of the UE 4400. The power source assembly 4406 may include a power management system, one or more power sources, and any other assemblies associated with the generation, management and distribution of power in the UE 4400.

The multi-media assembly 4408 includes a screen for providing an output interface between the UE 4400 and a user. In some embodiments of the present disclosure, the screen may include a Liquid Crystal Display (LCD) and a Touch Panel (TP). When the screen includes the touch panel, the screen may be implemented as a touch screen to receive input signals from the user. The touch panel includes at least one touch sensor to sense touches, swipes, and gestures on the touch panel. The touch sensor may not only sense a boundary of a touch or swipe action, but also sense a period of time and a pressure associated with the touch or swipe action. In some embodiments of the present disclosure, the multi-media assembly 4408 includes a front-facing camera and/or a rear-facing camera. When the UE 4400 is in an operating mode, such as a shooting mode or a video mode, the front-facing camera and/or the rear-facing camera may receive external multi-media data. Each of the front-facing camera and the rear-facing camera may be a fixed optical lens system or has focal length and optical zoom capability.

The audio assembly 4410 is configured to output and/or input audio signals. For example, the audio assembly 4410 includes a microphone (MIC) configured to receive an external audio signal when the UE 4400 is in an operating mode, such as a call mode, a recording mode, and a voice recognition mode. The received audio signal may be further stored in the memory 4404 or transmitted via the communication assembly 4416. In some embodiments of the present disclosure, the audio assembly 4410 further includes a speaker to output audio signals.

The I/O interface 4412 provides an interface between the processing assembly 4402 and peripheral interface modules, such as a keyboard, a click wheel, buttons, and the like. The buttons may include, but not limited to, a home button, a volume button, a starting button, and a locking button.

The sensor assembly 4414 includes one or more sensors to provide status assessments about various aspects of the UE 4400. For example, the sensor assembly 4414 may detect an open/closed status of the UE 4400, relative positioning of assemblies, e.g., the display and the keypad, of the UE 4400, a change in a position of the UE 4400 or an assembly of the UE 4400, a presence or absence of user contact with the UE 4400, an orientation or an acceleration/deceleration of the UE 4400, and a change in a temperature of the UE 4400. The sensor assembly 4414 may include a proximity sensor configured to detect the presence of nearby objects without any physical contact. The sensor assembly 4414 may also include a light sensor, such as a Complementary Metal Oxide Semiconductor (CMOS) or Charge-Coupled Device (CCD) image sensor, for use in imaging applications. In some embodiments of the present disclosure, the sensor assembly 4414 may also include an accelerometer sensor, a gyroscope sensor, a magnetic sensor, a pressure sensor, or a temperature sensor.

The communication assembly 4416 is configured to facilitate wired or wireless communication between the UE 4400 and other devices. The UE 4400 may access a wireless network based on a communication standard, such as Wi-Fi, 2G or 3G, or a combination thereof. In an exemplary embodiment of the present disclosure, the communication assembly 4416 receives a broadcast signal or broadcast associated information from an external broadcast management system via a broadcast channel. In an exemplary embodiment of the present disclosure, the communication assembly 4416 further includes a Near Field Communication (NFC) module to facilitate short-range communication. For example, the NFC module may be implemented based on an RF Identification (RFID) technology, an Infrared Data Association (IrDA) technology, an Ultra-Wide Band (UWB) technology, a Blue Tooth (BT) technology, and other technologies.

In the exemplary embodiment of the present disclosure, the UE 4400 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above-mentioned method.

FIG. 45 is a block diagram of a base station 4500 according to an embodiment of the present disclosure. For example, the base station 4500 may be provided as a network side device. As shown in FIG. 45, the base station 4500 includes a processing assembly 4522, which further includes one or more processors and memory resources represented by a memory 4532 for storing therein instructions to be executed by the processing assembly 4522, e.g., applications. The applications stored in the memory 4532 may include one or more modules each corresponding to one group of instructions. In addition, the processing assembly 4522 is configured to execute the instructions, so as to implement any method for the base station, e.g., the method as shown in FIG. 3.

The base station 4500 further includes a power source assembly 4526 configured to perform power management over the base station 4500, a wired or wireless network interface 4550 configured to couple the base station 4500 to a network, and an Input/Output (I/O) interface 4558. The base station 4500 may be based on an operating system stored in the memory 4532, e.g., Windows Server TM, Mac OS XTM, Unix TM, Linux TM, Free BSDTM, or the like.

In the above embodiments of the present disclosure, the methods have been described from both the network side device and the UE. In order to achieve various functions in the methods provided in the embodiments of the present disclosure, each of the network side device and the UE includes a hardware structure and a software module, i.e., the functions are achieved in the form of the hardware structure, the software module, or a combination thereof. A certain function in these functions is executed via the hardware structure, the software module, or a combination thereof.

In the above embodiments of the present disclosure, the methods have been described from both the network side device and the UE. In order to achieve various functions in the methods provided in the embodiments of the present disclosure, each of the network side device and the UE includes a hardware structure and a software module, i.e., the functions are achieved in the form of the hardware structure, the software module, or a combination thereof. A certain function in these functions is executed via the hardware structure, the software module, or a combination thereof.

In the above embodiments of the present disclosure, the methods have been described from both the network side device and the UE. In order to achieve various functions in the methods provided in the embodiments of the present disclosure, each of the network side device and the UE includes a hardware structure and a software module, i.e., the functions are achieved in the form of the hardware structure, the software module, or a combination thereof. A certain function in these functions is executed via the hardware structure, the software module, or a combination thereof.

The present disclosure provides in some embodiments a communication apparatus, which includes a transceiving module and a processing module. The transceiving module incudes a transmission module and/or a reception module, the transmission module is configured to achieve a transmission function, the reception module is configured to achieve a reception function, and the transceiving module is configured to achieve the transmission function and/or the reception function.

The communication apparatus may be a UE (e.g., the UE in the above-mentioned method embodiments), an apparatus in the UE, or an apparatus capable of being used in combination with the UE. Alternatively, the communication apparatus may be a network device, an apparatus in the network device, or an apparatus capable of being used in combination with the network device.

The present disclosure provides in some embodiments another communication apparatus. The communication apparatus may be a network device, a UE (e.g., the UE in the above-mentioned method embodiments), or a chip, a chip system or a processor which supports the network device to achieve the above-mentioned method, or a chip, a chip system or a processor which supports the UE to achieve the above-mentioned method. The communication apparatus is used to achieve the above-mentioned methods, which will not be particularly defined herein.

The communication apparatus may include one or more processors. The processor may be a general-purpose processor or special-purpose processor, e.g., a baseband processor or a central processing unit. The baseband processor is configured to process a communication protocol as well as communication data, and the central processing unit is configured to control the communication apparatus (e.g., a network side device, a baseband chip, a terminal device, a terminal device chip, a DU or a CU), execute a computer program, and process data in the computer program.

Optionally, the communication apparatus further includes one or more memories storing therein a computer program. The computer program is executed by the processor, so that the communication apparatus implements the above-mentioned method. Optionally, the memory further stores therein data. The communication apparatus is arranged independent of, or integrated with, the memory.

Optionally, the communication apparatus further includes a transceiver and an antenna. The transceiver is also called as a transceiver unit, a transceiver machine or a transceiver circuit, and it is configured to achieve a transmission function and a reception function. The transceiver includes a receiver and a transmitter. The receiver is called as a receiving machine or a reception circuit, and it is configured to achieve the reception function. The transmitter is called as a transmitting machine or a transmission circuit, and it is configured to achieve the transmission function.

Optionally, the communication apparatus further includes one or more interface circuits. The interface circuit is configured to receive a code instruction and transmit it to the processor. The processor executes the code instruction, so that the communication apparatus implements the above-mentioned method.

In a case that the communication apparatus is a first node, the processor is configured to execute the method as shown in any one of FIGs. 3 to 36.

In a case that the communication apparatus is a second node, the processor is configured to execute the method as shown in FIG. 37.

In a case that the communication apparatus is a third node, the processor is configured to execute the method as shown in FIG. 38.

In a possible embodiment of the present disclosure, the processor may include a transceiver for achieving a reception function and a transmission function. For example, the transceiver is a transceiver circuit, an interface, or an interface circuit. The transceiver circuit, the interface or the interface circuit for achieving the reception function and the transmission function may be arranged separately, or integrated with each other. The transceiver circuit, the interface or the interface circuit is configured to read and write codes/data, or transmit/or transfer signals.

In a possible embodiment of the present disclosure, the processor stores therein a computer program, and the computer program is executed by the processor, so that the communication apparatus implements the above-mentioned method. The computer program may be programmed in the processor, and in this case, the processor may be implemented via hardware.

In a possible embodiment of the present disclosure, the communication apparatus includes a circuit for implementing the above-mentioned transmission, reception or communication function. The processor and the transceiver described in the embodiments of the present disclosure may be implemented in an Integrated Circuit (IC), an analog IC, a Radio Frequency IC (RFIC), a mixed-signal IC, an Application Specific Integrated Circuit (ASIC), a Printed Circuit Board (PCB) or an electronic device. The processor and the transceiver may also be manufactured through various IC processes, e.g., Complementary Metal Oxide Semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication apparatus mentioned hereinabove may be a network device or a UE (e.g., the UE in the above-mentioned method embodiments), but the scope of the communication apparatus is not limited thereto. The communication apparatus may be an independent device, or a part of a large device. For example, the communication apparatus may be: (1) an independent IC, chip, chip system or chip sub-system; (2) a set of one or more ICs (optionally, the IC set also includes a memory member for storing therein data and a computer program; (3) an ASIC, e.g., a Modem; (4) a module capable of being embedded into the other device; (5) a receiver, a terminal device, a smart terminal device, a cellular phone, a wireless device, a handheld device, a mobile unit, a vehicle-mounted device, a network device, a cloud device, an artificial intelligence device, etc.; or (6) the other device.

In a case that the communication apparatus is a chip or a chip system, the chip includes a processor and an interface. There may exist one or more processors, and more than one interface.

Optionally, the chip further includes a memory for storing therein necessary computer programs and data.

It should be appreciated that, various illustrative logical blocks and steps listed in the embodiments of the present disclosure may be implemented through electronic hardware, computer software, or a combination thereof. Whether these functions are implemented through hardware or software depends on design requirements on an entire system and specific applications. For each specific application, various methods are used to achieve the function, which however shall not be construed as going beyond the scope of the present disclosure.

The present disclosure further provides in some embodiments a readable storage medium storing therein a readable storage medium storing therein an instruction. The instruction is executed by a computer to achieve the functions in any of the above method embodiments.

The present disclosure further provides in some embodiments a computer program product. The computer program product is executed by a computer to achieve the functions in any of the above method embodiments.

In the above-mentioned embodiments of the present disclosure, all of, or a part of, the modules are implemented in the form of software, hardware, firmware or a combination thereof. When the modules are implemented in the form of software, all of, or a part of, the modules are implemented in the form of a computer program product. The computer program product includes one or more computer programs. When the computer programs are loaded onto and executed by a computer, all of, or a part of, the processes or functions in the embodiments of the present disclosure are generated by the computer. The computer may be a general-purpose computer, a special-purpose computer, a computer network, or any other programmable device. The computer program may be stored in a computer-readable storage medium, or transferred from one computer-readable storage medium to another computer-readable storage medium, e.g., transferred from one website, one computer, one server or one data center to another website, another computer, another server or another data center in a wired manner (e.g., through a co-axial cable, an optical fiber, or a digital subscriber line (DSL)) or a wireless manner (e.g., infrared, cordless or microwave). The computer-readable storage medium may be any available medium capable of being accessed by a computer, or a data storage device, e.g., a server or a data center including one or more available mediums. The available medium may be a magnetic medium (e.g., a floppy disc, a hard disc or magnetic tape), an optical medium (e.g., a digital video disc (DVD)), or a semiconductor medium (e.g., a solid state disk (SSD)).

It should be appreciated that, such words as "first" and "second" are used to differentiate the items from each other, but shall not be construed as limiting the scope of the present disclosure or indicating any sequence.

The expression "at least one" is used to indicate one or more, e.g., two, three, four or more, which will not be particularly defined herein. In the embodiments of the present disclosure, for technical features of a same kind, the words "first", "second", "third", "A", "B", "C" and "D" are used to differentiate these technical features, without indicating any sequence or sizes thereof.

Other embodiments of the present disclosure will be apparent to those skilled in the art from consideration of the specification and practice of the present disclosure disclosed here. This application is intended to cover any variations, uses, or adaptations of the disclosure following the general principles thereof and including such departures from the disclosure as come within known or customary practice in the art. It is intended that the specification and examples be considered as exemplary only, with a true scope and spirit of the disclosure being indicated by the appended claims.

It should be appreciated that, the present disclosure is not limited to the exact construction that has been described hereinabove and illustrated in the accompanying drawings, and that various modifications and changes can be made without departing from the scope thereof. It is intended that the scope of the present disclosure only be limited by the appended claims.

## Claims

1. A model selection method, executed by a first node, comprising:
determining information for model selection; and selecting a model based on the information for the model selection.

2. The model selection method according to claim 1, wherein the information for the model selection comprises at least one of:
priority level information, wherein a priority level is used to indicate a model selection priority level and/or a fallback priority level;
range information for the model selection, wherein the range information is used to indicate a range in which a model is available;
use time information, wherein the use time information is used to indicate time in a case the model is available;
user equipment (UE) status information, wherein the UE status information is used to indicate a status of a UE in a case that a model is available;
function type information, wherein the function type information is used to indicate a function for the model;
an event criterion, wherein the event criterion is used to indicate a specific event to be used by the model;
a wireless environment-related threshold criterion, wherein the wireless environment-related threshold criterion is used to indicate a wireless environment in which the model is available;
a service-related criterion, wherein the service-related criterion is used to indicate a specific service and/or a service experience for which the model is available;
a model performance-related criterion, wherein the model performance-related criterion is used to indicate a performance index for which the model is available;
a UE movement speed criterion, wherein the UE movement speed criterion is used to indicate a movement speed and/or a specific movement speed threshold of a UE for which the model is available;
a UE computing power criterion and/or an electricity consumption criterion, wherein the UE computing power criterion and/or the electricity consumption criterion are used to indicate a capability requirement of a UE in which the model is available; or
a model application scenario, wherein the model application scenario is used to indicate a geographical coverage scenario in which the model is available.

3. The model selection method according to claim 2, wherein the information for the model selection comprises the priority level information,
wherein the selecting the model based on the information for the model selection comprises:
in response to a first model being abnormal or not satisfying a use condition, falling back to a second model satisfying the use condition based on the priority level information, wherein the second model is a model that satisfies the use condition and has a second lowest priority level; or
falling back to a third model based on the priority level information, wherein the third model is a model that has a lowest priority level or a default model.

4. The model selection method according to claim 2, wherein the information for the model selection comprises the priority level information,
wherein the selecting the model based on the information for the model selection comprises:
in a case where at least one model in a model set satisfies the information for the model selection, selecting a model that has a highest priority level in the at least one model based on the priority level information, wherein the information for the model selection comprises at least one piece of information for the model selection except the priority level information.

5. The model selection method according to claim 2, wherein the range information for the model selection comprises a network identity (ID),
wherein the network ID comprises at least one of:
a public land mobile network (PLMN) list;
a tracking area code (TAC) list;
a radio access network (RAN) notification area (RNA);
a next generation (NG)-RAN node ID list;
a cell list; or
longitude and latitude information and/or height information.

6. The model selection method according to claim 2, wherein the status of the UE comprises at least one of:
a radio resource control (RRC)_CONNECTED state;
a RRC_INACTIVE state; or
a RRC_IDLE state.

7. The model selection method according to claim 2, wherein the wireless environment-related threshold criterion comprises at least one of:
signal intensity measured by the UE;
signal interference measured by the UE; or
uplink signal interference measured by a base station.

8. The model selection method according to claim 2, wherein the service-related criterion comprises at least one of:
protocol data unit (PDU) session information;
quality of service (QoS) flow information;
radio bearer information;
network slice information;
a quality of experience (QoE) threshold; or
a QoS threshold.

9. The model selection method according to claim 2, wherein the UE computing power criterion comprises a threshold of a utilization rate of a central processing unit (CPU).

10. The model selection method according to claim 1, wherein the information for the model selection is per model and/or per model ID.

11. The model selection method according to claim 1, wherein the determining the information for the model selection comprises:
receiving the information for the model selection sent by a second node.

12. The model selection method according to claim 11, wherein the first node and the second node are selected from at least one of:
the first node being a UE and the second node being a base station;
the first node being the UE and the second node being a core network node;
the first node being the base station and the second node being the core network node;
the first node being the base station and the second node being an operation, administration and maintenance (OAM) node;
the first node being a target base station in a handover procedure and the second node being a source base station in the handover procedure;
the first node being a master node (MN) in a multi-connectivity scenario and the second node being a secondary node (SN) in the multi-connectivity scenario;
the first node being a new serving next generation node B (gNB) and the second node being a last serving gNB; or
the first node being a central unit (CU) in a separation architecture and the second node being a distributed unit (DU) in the separation architecture.

13. The model selection method according to claim 12, wherein the receiving the information for the model selection sent by the second node comprises at least one of:
in a case where the first node is the UE and the second node is the base station, receiving a RRC message sent by the second node, wherein the RRC message comprises the information for the model selection;
in a case where the first node is the UE and the second node is the core network node, receiving a non-access stratum (NAS) message sent by the second node, wherein the NAS message comprises the information for the model selection;
in a case where the first node is the base station and the second node is the core network node, receiving a next generation application protocol (NGAP) message sent by the second node, wherein the NGAP message comprises the information for the model selection;
in a case where the first node the base station and the second node is the OAM node, receiving the information for the model selection sent by the second node;
in a case where the first node is the target base station in the handover procedure and the second node is the source base station in the handover procedure, receiving an Xn application protocol (XnAP) message sent by the second node, wherein the XnAP message comprises the information for the model selection;
in a case where the first node is the MN in the multi-connectivity scenario and the second node is the SN in the multi-connectivity scenario, receiving an XnAP message sent by the second node, wherein the XnAP message comprises the information for the model selection;
in a case where the first node is the new serving gNB and the second node is the last serving gNB, receiving an XnAP message sent by the second node, wherein the XnAP message comprises the information for the model selection; or
in a case where the first node is the CU in the separation architecture and the second node is the DU in the separation architecture, receiving an F1 application protocol (F1AP) message sent by the second node, wherein the F1AP message comprises the information for the model selection.

14. The model selection method according to claim 1, further comprising:
in response to the model selection being completed, sending a model selection result to a third node.

15. The model selection method according to claim 14, wherein the first node and the third node are selected from at least one of:
the first node being a UE and the third node being a base station;
the first node being the UE and the third node being a core network node;
the first node being the base station and the third node being the UE;
the first node being a CU in a separation architecture and the third node being a DU in the separation architecture;
the first node being the DU in the separation architecture and the third node being the CU in the separation architecture;
the first node being a MN in a multi-connectivity scenario and the third node being a SN in the multi-connectivity scenario; or
the first node being the SN in the multi-connectivity scenario and the third node being the MN in the multi-connectivity scenario.

16. The model selection method according to claim 14, wherein the sending the model selection result to the third node comprises at least one of:
in a case where the first node is a UE and the third node is a base station, sending the model selection result to the third node via a RRC signaling and/or a lower layer signaling;
in a case where the first node is the UE and the third node is a core network node, sending the model selection result to the third node via a NAS signaling;
in a case where the first node is the base station and the third node is the UE, sending the model selection result to the third node via the RRC signaling and/or the lower layer signaling;
in a case where the first node is a CU in a separation architecture and the third node is a DU in the separation architecture, sending an F1AP message to the third node, wherein the F1AP message comprises the model selection result;
in a case where the first node is the DU in the separation architecture and the third node is the CU in the separation architecture, sending the F1AP message to the third node, wherein the F1AP message comprises the model selection result;
in a case where the first node is a MN in a multi-connectivity scenario and the third node is a SN in the multi-connectivity scenario, sending an XnAP message to the third node, wherein the XnAP message comprises the model selection result; or
in a case where the first node is the SN in the multi-connectivity scenario and the third node is the MN in the multi-connectivity scenario, sending the XnAP message to the third node, wherein the XnAP message comprises the model selection result.

17. The model selection method according to any one of claims 14 to 16, wherein the model selection result comprises ID information for identifying the model.

18. A model selection method, executed by a second node, comprising:
sending information for model selection to a first node, wherein the information for the model selection is used to indicate the first node to select a model.

19. A model selection method, executed by a third node, comprising:
receiving a model selection result sent by a first node; and performing a relevant operation based on the model selection result.

20. A model selection apparatus, applied to a first node, comprising:
a determination module configured to determine information for model selection; and
a selection module configured to select a model based on the information for the model selection.

21. A model selection apparatus, applied to a second node, comprising:
a sending module configured to send information for model selection to a first node, wherein the information for the model selection is used to indicate the first node to select a model.

22. A model selection apparatus, applied to a third node, comprising:
a reception module configured to receive a model selection result sent by a first node; and
an execution module configured to perform a relevant operation based on the model selection result.

23. A first node, comprising a processor and a memory, wherein the memory is configured to store therein a computer program, and the processor is configured to execute the computer program to implement the model selection method according to any one of claims 1 to 17.

24. A second node, comprising a processor and a memory, wherein the memory is configured to store therein a computer program, and the processor is configured to execute the computer program to implement the model selection method according to claim 18.

25. A third node, comprising a processor and a memory, wherein the memory is configured to store therein a computer program, and the processor is configured to execute the computer program to implement the model selection method according to claim 19.

26. A communication apparatus, comprising a processor and an interface circuit, wherein
the interface circuit is configured to receive a code instruction and transmit the code instruction to the processor; and
the processor is configured to execute the code instruction to implement the model selection method according to any one of claims 1 to 17, or implement the model selection method according to claim 18, or implement the model selection method according to claim 19.

27. A computer-readable storage medium storing therein an instruction, wherein the instruction is executed to implement the model selection method according to any one of claims 1 to 17, or implement the model selection method according to claim 18, or implement the model selection method according to claim 19.

28. A model selection system, comprising:
a second node configured to send information for model selection to a first node; and
the first node configured to receive the information for the model selection sent by the second node and select a model based on the information for the model selection.

29. A model selection system, comprising:
a first node configured to determine information for model selection, select a model based on the information for the model selection, and send a model selection result to a third node; and
the third node configured to receive the model selection result sent by the first node, and perform a relevant operation based on the model selection result.
